# EUROPÄISCHE PATENTSCHRIFT

(11) **EP 1 711 300 B1**
(45) Veröffentlichungstag und Bekanntmachung des Hinweises auf die Patenterteilung: **19.11.2014**
(21) Anmeldenummer: 05700029.1
(22) Anmeldetag: 02.02.2005
(51) Int. Cl.: B23K 9/133

(54) **SCHWEISSBRENNER MIT EINEM BRENNERGEHÄUSE UND ANTRIEB ZUR SCHWEISSDRAHTFÖRDERUNG**
WELDING TORCH WITH A TORCH HOUSING AND DRIVE FOR WELDING ROD TRANSPORT
CHALUMEAU A SOUDER COMPRENANT UN BOITIER ET UN MECANISME D'ENTRAINEMENT DESTINE AU TRANSPORT DE LA BAGUETTE DE SOUDURE

(30) Priorität: 04.02.2004 AT 1602004
(43) Veröffentlichungstag der Anmeldung: 18.10.2006
(60) Teilanmeldung: 13198405.6
(73) Patentinhaber: Fronius International GmbH, 4643 Pettenbach 319 (AT)
(72) Erfinder: FLATTINGER, Günther, A-4061 Pasching (AT); SCHÖRGHUBER, Manfred, A-4600 Wels (AT); HIMMELBAUER, Karin, A-4493 Wolfern (AT)
(74) Vertreter: Sonn & Partner Patentanwälte
(86) Internationale Anmeldenummer: PCT/AT2005/000030
(87) Internationale Veröffentlichungsnummer: WO 2005/075138

(56) Entgegenhaltungen:
- GB-A- 1 449 232
- US-A- 3 414 197
- US-A- 4 954 690

## Beschreibung

Die Erfindung betrifft einen Schweißbrenner nach dem Oberbegriff des Anspruchs 1 (siehe z.B. US-A-4 954 690).

Aus dem Stand der Technik ist bekannt, dass bei den in den Schweißbrennern eingesetzten Antriebsmotoren diese als eigenständige Baugruppen ausgebildet sind. Hierzu weist der Antriebsmotor ein eigenes Statorgehäuse auf, an dem anschließend sämtliche Elemente, wie die Statorwicklungen bzw. Statormagnete, der Rotor mit dem Rotorpaket, insbesondere den Rotorwicklungen bzw. Rotormagneten, die Lager für den Rotor, das Lagerschild und eine Motorplatte, eingebaut und befestigt sind. Diese eigenständige Baugruppe des Antriebsmotors wird am Brennergehäuse befestigt. Damit die Förderkraft verstärkt wird, ist an der Motorwelle ein Getriebe und an dieser eine Antriebsrolle befestigt, sodass mit einer dazugehörige Druckrolle eine Schweißdrahtförderung möglich ist. Nachteilig ist hierbei, dass zusätzlicher bzw. mehr Platz beansprucht wird, da das Statorgehäuse für die Befestigung der Lager besonders stabil ausgeführt werden muss. Ein weiterer Nachteil liegt darin, dass keine optimale Kühlung des Antriebsmotors möglich ist, da die entstehende Rotorwärme vom Statorgehäuse aufgenommen wird und keine optimale Wärmeableitung aufgrund kleiner Kühlflächen oder entsprechender Übergangswiderstände zum Schweißbrenner erfolgt.

Eine andere Ausführungsvariante besteht aus einem freiliegend, luftgekühlten Antriebsmotor. Da hier die Kühlung über das Statorgehäuse erfolgt, ist es von Nachteil, dass nur eine sehr geringe Kühlfläche zur Verfügung steht.

Beispielsweise beschreiben die GB 911 649 A, die US 4 845 336 A, die GB 1 134 664 A, die GB 1 080 125 A sowie die GB 1 093 736 A Konstruktionen von Schweißbrennern mit Antriebsmotoren, welche als eigenständige Baugruppen ausgebildet sind und eigene Statorgehäuse aufweisen.

Die Aufgabe der vorliegenden Erfindung besteht daher in der Schaffung eines Schweißbrenners, bei dem eine kleinstmögliche Baugröße mit einer elektrischen Antriebseinheit geschaffen wird. Eine weitere Aufgabe der Erfindung liegt darin, dass die Kühlung der Antriebseinheit verbessert wird, wodurch die Lebensdauer erhöht wird.

Eine Aufgabe der Erfindung liegt auch darin, einen elektrischen Antriebsmotor zu schaffen, bei dem eine elektrische Potentialtrennung zwischen Antriebsrolle und Statorgehäuse und/oder Schweißbrenner gegeben ist.

Die der Erfindung zugrunde liegende Aufgabe wird durch einen Schweißbrenner mit den Merkmalen des Anspruchs 1 gelöst.

Die der Erfindung zugrunde liegende Aufgabe wird dadurch gelöst, dass ein Teil des Brennergehäuses als Bestandteil der Antriebseinheit ausgebildet ist, wobei ein Lager für eine Lagerung des Rotors, insbesondere der Motorwelle, am Brennergehäuse zur Stabilisierung und Positionierung des Rotors befestigt ist. Vorteilhaft ist hierbei, dass durch die Lagerung direkt am Brennergehäuse bzw. am Grundkörper die Fertigungstoleranzen zwischen der Position der Motorwelle und der Schweißdrahtförderachse reduziert wird, da nur eine Fertigungstoleranz bei der Montage der Lager im Brennergehäuse anfällt, während bei den aus dem Stand der Technik bekannten Aufbauten eine Toleranzkette durch die Montage des Lagerschildes am Schweißbrenner gebildet wird.

Ein weiterer Vorteil liegt darin, dass ein verstärktes Lager verwendet und somit auf die erforderlichen Belastungen der Schweißdrahtförderung angepasst werden kann. Ein wesentlicher Vorteil liegt darin, dass durch den Einbau des Lagers ins Brennergehäuse der Abstand zwischen Lagerung und Antriebsrolle verringert werden kann, wodurch das Biegemoment auf die Motorwelle reduziert wird und die Lebensdauer der Motorwelle erhöht wird. Ein wesentlicher Vorteil liegt vor allem darin, dass eine optimale Kühlung der Motorteile des Antriebsmotors geschaffen wird, da nunmehr der Schweißbrenner bzw. das Brennergehäuse als Kühlfläche genützt werden kann, wodurch die Lebensdauer wesentlich erhöht wird. Dabei ist wesentlich, dass nunmehr nicht, wie aus dem Stand der Technik bekannt, die von dem Antriebsmotor entstehende Wärme von einem Statorgehäuse auf eine Kühlfläche übertragen werden muss, sondern die entstehende Wärme gleich direkt in das Brennergehäuse geleitet wird. Dadurch gibt es keine Übergangsfläche mehr, an der sich ein Wärmestau bilden kann, was zur Überhitzung des Antriebsmotors führen kann.

Von Vorteil ist auch eine Ausbildung nach Anspruch 2, dass durch die Integration des Antriebsmotors direkt in das Brennergehäuse das an sich übliche Statorgehäuse beim Antriebsmotor entfallen kann und somit weniger Platz für den Antriebsmotor im Schweißbrenner benötigt wird, wodurch die Baugröße und das Gewicht des Schweißbrenners reduziert wird. Damit wird weiters erreicht, dass durch die kompakte kleine Bauform und das geringere Gewicht die Zugänglichkeit bei Roboteranwendungen wesentlich verbessert wird. Ein besonderer Vorteil liegt auch darin, dass der Querschnitt zur Kraftübertragung erhöht wird, wogegen beim Stand der Technik durch die Freistellung des Motors der Querschnitt, welcher zur Kraftübertragung zwischen Brenneraufnahme und Rohrbogen zur Verfügung steht, verringert wird, was die Festigkeit des Schweißbrenners reduziert.

Von Vorteil ist auch eine Ausgestaltung nach Anspruch 3, da dadurch das Brennergehäuse aus Teilen mit unterschiedlichen Materialien und Materialdicken zusammengesetzt werden kann, wodurch eine erhebliche Gewichtsersparnis erzielt werden kann. Dabei können die einzelnen Teile des Brennergehäuses aus Werkstoffen von unterschiedlichen Fertigungsverfahren, wie beispielsweise als Spritzguss oder Blech, usw., eingesetzt werden, sodass eine optimale Anpassung der Teile für das jeweilige Einsatzgebiet, wie beispielsweise Kühlung des Antriebsmotors, Steifigkeit des Schweißbrenners, usw., vorgenommen werden kann.

Es ist auch eine Ausbildung nach Anspruch 4 von Vorteil, da dadurch beispielsweise der Grundkörper als Gussteil hergestellt und somit eine Gewichtsersparnis und Festigkeitserhöhung erzielt werden kann.

Durch die Ausgestaltung nach Anspruch 5 oder 6 wird in vorteilhafter Weise erreicht, dass das Statorpaket fix mit dem Brennergehäuse verbunden ist, sodass Vibrationen keinen Einfluss auf die Befestigung des Antriebsmotors ausüben, wogegen beim Stand der Technik durch die Vibrationen die Befestigung des Motors am Brennergehäuse gelöst werden kann. Vorteilhaft ist weiters, dass durch den größeren Querschnitt des Brennergehäuses gegenüber einem aus dem Stand der Technik verwendeten Statorgehäuse eine hohe Festigkeit gegeben ist.

Es ist aber auch eine Ausgestaltung nach den Ansprüchen 7 und 8 von Vorteil, da dadurch keine zusätzlichen Zwischenstücke für die Lager benötigt werden. Ein weiterer Vorteil liegt darin, dass durch die höhere Festigkeit bzw. Steifigkeit des Brennergehäuses gegenüber einem üblichen Statorgehäuse ein verstärktes Lager eingesetzt werden kann, sodass die Lebensdauer wesentlich verbessert wird.

Vorteilhaft ist auch eine Ausgestaltung nach Anspruch 9, da dadurch eine einfache Montage und hohe Festigkeit erreicht wird.

Es ist auch eine Ausbildung nach Anspruch 10 von Vorteil, da dadurch ein aus dem Stand der Technik bekannter Rotor eingesetzt werden kann, wodurch Kosten reduziert werden können.

Vorteilhaft ist aber auch eine Ausbildung nach Anspruch 11, da dadurch ein sehr guter Schutz der Motorteile gegeben ist. Gleichzeitig wird durch den Einsatz der Isolierplatte erreicht, dass diese zum Abdichten der Motorteile verwendet wird, wobei über eine große Fläche eine einfache und optimale Abdichtung erreicht wird. Weiters ist von Vorteil, dass eine Berührung des Schweißdrahtes mit dem Brennergehäuse verhindert wird.

Von Vorteil ist eine Ausgestaltung nach Anspruch 12, da dadurch ein geringes Massenträgheitsmoment sowie ein schnelles Ansprechverhalten der Antriebseinheit bei der Schweißdrahtförderung erzielt wird.

Durch eine Ausgestaltung nach Anspruch 13 wird in vorteilhafter Weise erreicht, dass durch den Einsatz eines Getriebes in einfacher Form eine Veränderung der Kraftübertragung bzw. der Drehgeschwindigkeit ermöglicht wird.

Es ist aber auch eine Ausgestaltung nach Anspruch 14 von Vorteil, da dadurch eine weitere Gewichtsreduzierung geschaffen wird und gleichzeitig eine Vergrößerung des Innenraumes des Schweißbrenners erreicht wird.

Nach einer Ausgestaltung gemäß Anspruch 15 wird in vorteilhafter Weise erreicht, dass keine Übergangswiderstände für die Wärmeableitung des Antriebsmotors vorhanden sind, wodurch eine optimale Kühlung des Antriebsmotors erzielt wird.

Vorteilhaft ist auch eine Ausgestaltung nach Anspruch 16, bei der die Kühlung des Antriebsmotors nicht ausschließlich durch die Umgebungsluft stattfindet, sondern zusätzlich durch ein Kühlmedium Wärme abgeführt wird. Durch die Integration von Kühlkanälen direkt in das Gehäuse werden keine zusätzlichen Kühlleitungen benötigt. Werden hingegen Kühlleitungen eingesetzt, so wird erreicht, dass ein einfacherer Aufbau des Brennergehäuses und somit eine Kostenreduzierung erreicht wird. Bei einer Kombination von Kühlkanälen und Kühlleitungen wird erreicht, dass eine optimale Kühlung der Motorteile geschaffen wird und somit Antriebsmotoren mit hoher Leistung im Brennergehäuse eingesetzt werden können.

Durch die Ausgestaltung nach Anspruch 17 wird erreicht, dass die Oberfläche des Brennergehäuses vergrößert und somit eine noch bessere Kühlung erzielt wird.

Von Vorteil ist auch eine Ausgestaltung nach Anspruch 18, da bei einem Handschweißbrenner der Griffteil für die Integration des Antriebsmotors verwendet wird, sodass ein sehr kleiner Handschweißbrenner mit sehr guten Handlingeigenschaften realisiert werden kann.

Es ist auch eine Ausbildung nach Anspruch 19 von Vorteil, da dadurch der Aufbau auch für Planetarantriebe oder andere Arten von Antrieben eingesetzt werden kann. Zusätzlich wird erreicht, dass eine weitere Reduktion der Baugröße erreicht wird.

Vorteilhaft ist auch eine Ausgestaltung nach Anspruch 20, da dadurch die Sensorsignale über kurze Leitungen zur Steuerelektronik übertragen werden und somit die Störanfälligkeit reduziert wird. Dabei ist es auch möglich, dass eine einfache Kommunikation mit externen Steuervorrichtungen beispielsweise über einen seriellen Bus stattfinden kann.

Ein Vorteil nach der Ausgestaltung gemäß Anspruch 21 liegt darin, dass durch eine externe Steuervorrichtung die Steuerelektronik im Schweißbrenner reduziert oder entfallen kann und somit die Kosten des Schweißbrenners reduziert werden können.

Durch die Ausgestaltung nach Anspruch 22 wird in vorteilhafter Weise erreicht, dass direkt vom Schweißbrenner aus ein Steuervorgang eingeleitet werden kann, wie beispielsweise das Starten des Schweißprozesses oder das Einfädeln des Schweißdrahtes, und somit die Bedienerfreundlichkeit gegeben ist.

Es ist aber auch eine Ausgestaltung nach Anspruch 23 von Vorteil, da dadurch unterschiedliche Materialien kombiniert werden können, sodass ein optimales Handling und ein sehr geringes Gewicht des Schweißbrenners erzielt werden kann. Somit kann auch eine Kostenreduktion erreicht werden.

Bei der Ausgestaltung nach Anspruch 24 wird in vorteilhafter Weise erreicht, dass der Montageaufwand für den Schweißbrenner möglichst gering gehalten wird, da durch den Einsatz einer Montageplatte der Aufbau des Innenlebens des Schweißbrenners vereinfacht wird und anschließend die vormontierte Montageplatte mit den darauf aufgebauten Komponenten bzw. Teilen nur mehr in das Brennergehäuse eingebaut werden muss. Damit wird auch in vorteilhafter Weise erreicht, dass immer das selbe Brennergehäuse verwendet werden kann und an der bzw. den Montageplatten unterschiedliche Ausführungsformen, die an die jeweilige Aufgabe angepasst sind, aufgebaut werden können.

Vorteilhaft ist auch eine Ausbildung nach einem der Ansprüche 25 bis 27, da je nach Einsatzgebiet des Schweißbrenners der optimale Antriebsmotor in diesem integriert werden kann.

Von Vorteil ist auch eine Ausgestaltung nach einem der Ansprüche 28 bis 30, da durch die Isolierung verhindert wird, dass ein Kurzschluss und somit ein daraus resultierender Schweißstromfluss über das Schweißbrennergehäuse erfolgen kann und somit die Benutzersicherheit gewährleistet ist. Weiters wird auch erreicht, dass die Motorteile isoliert und somit geschützt sind und damit die Betriebssicherheit erhöht wird.

Es ist aber auch eine Ausgestaltung nach Anspruch 31 von Vorteil, da dadurch die Stromübertragung vom zugeführten Schweißstrom des Schweißgerätes zur Verbindungsstelle für den Rohrbogen, also der Stromversorgung für das Kontaktrohr, über das Brennergehäuse bzw. über Teile des Brennergehäuses erfolgen kann, sodass entsprechende Stromleitungen im Brennergehäuse entfallen können. Damit wird auch erreicht, dass eine Kühlung der stromführenden Teile leicht möglich ist.

Durch die Ausgestaltung nach Anspruch 32 wird in vorteilhafter Weise erreicht, dass der Benutzer keinerlei stromführende Teile berühren kann und es somit zu keiner Gefährdung durch einen Stromschlag kommen kann bzw. kein Kurzschluss bei Berührung des Werkstückes auftritt.

Bei einer Ausgestaltung nach Anspruch 33 wird in vorteilhafter Weise erreicht, dass beim maschinellen Einsatz des Schweißbrenners, z.B. an einem Roboter, kein Stromfluss zwischen Aufnahmeköper und Schweißbrenner stattfinden kann und somit eine Ausfallsicherheit aufgrund von Schweißstromfluss über die Anlage gegeben ist.

Vorteilhaft ist auch eine Ausgestaltung nach Anspruch 34, da dadurch eine optimale Anpassung an das Einsatzgebiet des Schweißbrenners vorgenommen werden kann. Somit ist es möglich, dass ein Basis-Schweißbrenner erzeugt wird und je nach Einsatzgebiet der Antriebsmotor durch zusätzliche Module darauf abgestimmt werden kann, wodurch eine Anpassung der Kraft bzw. Leistung des Antriebsmotors und/oder der Feinheit der Regelung und/oder des dynamischen Ansprechverhaltens des Antriebsmotors vorgenommen werden kann, ohne dabei den gesamten Schweißbrenner tauschen zu müssen.

Von Vorteil ist auch eine Ausgestaltung nach Anspruch 35, da dadurch direkt im Schweißbrenner eine Istwert-Erfassung des Zustandes bzw. der Motorbewegung des Antriebsmotors ermöglicht wird und somit eine entsprechende Regelung bzw. Steuerung bei einer Abweichung gegenüber eines Sollwertes vorgenommen werden kann. Somit wird eine sehr gute Schweißqualität erzielt.

Es ist aber auch eine Ausgestaltung nach Anspruch 36 von Vorteil, da damit eine automatische Erkennung der Parameter des Antriebsmotors durchgeführt werden kann, sodass eine selbstständige Anpassung der Regelung bzw. Steuerung, insbesondere der Regel- oder Steuerparameter, von der Schweißanlage vorgenommen werden kann.

Es ist auch eine Ausgestaltung nach Anspruch 37 von Vorteil, da dadurch ein Schweißbrenner mit mehreren Antriebsmotoren eingesetzt werden kann, sodass eine höhere Drahtförderkraft erzielt wird bzw. kleine Antriebsmotoren verwendet werden können.

Von Vorteil ist auch eine Ausgestaltung nach Anspruch 38, da dadurch ein einfacher Aufbau und eine Reduzierung der Toleranzkette erreicht wird.

Vorteilhaft ist aber auch eine Ausgestaltung nach Anspruch 39, da dadurch eine sehr einfach Montage der Antriebseinheit durch einfaches Einlegen in eine Gehäusehälfte und anschließendes Fixieren durch die weitere Gehäusehälfte erreicht wird.

Die vorliegende Erfindung wird anhand der beigefügten Zeichnungen, welche Ausführungsbeispiele des Schweißbrenners zeigen, noch weiter erläutert. Es zeigen:
Fig. 1 eine schematische Darstellung einer Schweißmaschine bzw. eines Schweißgerätes;
Fig. 2 eine schaubildliche Darstellung eines Schweißbrenners im zusammengebauten Zustand;
Fig. 3 eine schaubildliche Darstellung mit abgenommenem Abdeckteil;
Fig. 4 eine Explosionsdarstellung des Schweißbrenners und des integrierten Antriebsmotors, in vereinfachter, schematischer Darstellung;
Fig. 5 einen Schnitt durch den Schweißbrenner in Seitenansicht und vereinfachter, schematischer Darstellung;
Fig. 6 eine andere Ausführungsform des Schweißbrenners, in vereinfachter, schematischer Darstellung;
Fig. 7 eine weitere Ausführungsform des Schweißbrenners, in vereinfachter, schematischer Darstellung;
Fig. 8 einen anderen Aufbau des Schweißbrenners mit integriertem Antriebsmotor, in vereinfachter, schematischer Darstellung;
Fig. 9 eine Erweiterungsmöglichkeit des Schweißbrenners, in vereinfachter, schematischer Darstellung;
Fig. 10 und Fig. 11 eine Anpassungsmöglichkeit der Leistung oder des Ansprechverhaltens des Antriebsmotors bei einem integrierten Antriebsmotor im Schweißbrenner, in vereinfachter, schematischer Darstellung;
Fig. 12 ein anderes Ausführungsbeispiel für den Aufbau des Schweißbrenners mit integriertem Antriebsmotor;
Fig. 13 eine Ausführungsform eines Handschweißbrenners; und die
Fig. 14 bis 19 ein Ausführungsbeispiel eines Antriebsmotors als eigenständige Baueinheit in unterschiedlichen Ausführungen, in vereinfachter, schematischer Darstellung.

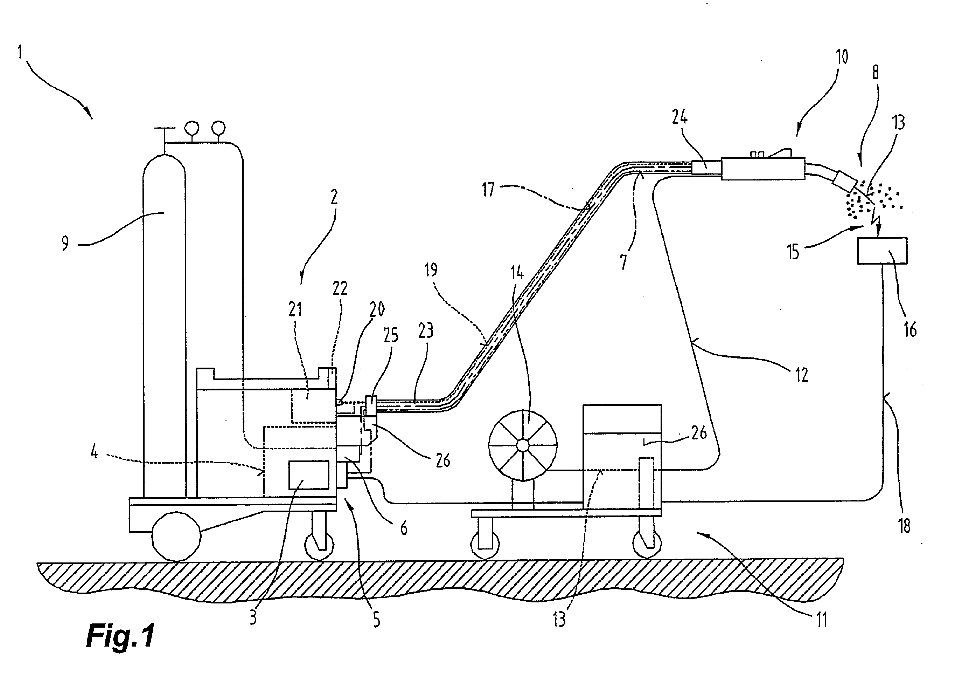

In Fig. 1 ist ein Schweißgerät 1 bzw. eine Schweißanlage für verschiedenste Prozesse bzw. Verfahren, wie z.B. MIG/MAG-Schweißen bzw. WIG/TIG-Schweißen oder Elektroden-Schweißverfahren, Doppeldraht/Tandem-Schweißverfahren, Plasma- oder Lötverfahren usw., gezeigt.

Das Schweißgerät 1 umfasst eine Stromquelle 2 mit einem Leistungsteil 3, einer Steuervorrichtung 4 und einem dem Leistungsteil 3 bzw. der Steuervorrichtung 4 zugeordneten Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise CO₂, Helium oder Argon und dgl., zwischen einem Gasspeicher 9 und einem Schweißbrenner 10 bzw. einem Brenner angeordnet ist.

Zudem kann über die Steuervorrichtung 4 noch ein Drahtvorschubgerät 11, welches für das MIG/MAG-Schweißen üblich ist, angesteuert werden, wobei über eine Versorgungsleitung 12 ein Zusatzwerkstoff bzw. ein Schweißdraht 13 von einer Vorratstrommel 14 bzw. einer Drahtrolle in den Bereich des Schweißbrenners 10 zugeführt wird. Selbstverständlich ist es möglich, dass das Drahtvorschubgerät 11, wie es aus dem Stand der Technik bekannt ist, im Schweißgerät 1, insbesondere im Grundgehäuse, integriert ist und nicht, wie in Fig. 1 dargestellt, als Zusatzgerät ausgebildet ist. Das Drahtvorschubgerät 11 kann auch für die Fassförderung ausgebildet sein. Es ist auch möglich, dass das Drahtvorschubgerät 11 den Schweißdraht 13 bzw. den Zusatzwerkstoff außerhalb des Schweißbrenners 10 an die Prozessstelle zuführt, wobei hierzu im Schweißbrenner 10 bevorzugt eine nicht abschmelzende Elektrode angeordnet ist, wie dies beim WIG/TIG-Schweißen üblich ist.

Der Strom zum Aufbauen eines Lichtbogens 15, insbesondere eines Arbeitslichtbogens, zwischen der Elektrode bzw. dem Schweißdraht 13 und einem Werkstück 16 wird über eine Schweißleitung 17 vom Leistungsteil 3 der Stromquelle 2 dem Schweißbrenner 10, insbesondere der Elektrode, zugeführt, wobei das zu verschweißende Werkstück 16, welches bevorzugt aus mehreren Teilen gebildet ist, über eine weitere Schweißleitung 18 ebenfalls mit dem Schweißgerät 1, insbesondere mit der Stromquelle 2, verbunden ist und somit über den Lichtbogen 15 bzw. einen gebildeten Plasmastrahl für einen Prozess ein Stromkreis aufgebaut werden kann. Zum Kühlen des Schweißbrenners 10 kann über einen Kühlkreislauf 19 der Schweißbrenner 10 beispielsweise unter Zwischenschaltung eines Strömungswächters 20 mit einem Flüssigkeitsbehälter, insbesondere einem Wasserbehälter 21, verbunden werden, wodurch bei der Inbetriebnahme des Schweißbrenners 10 der Kühlkreislauf 19, insbesondere eine für die im Wasserbehälter 21 angeordnete Flüssigkeit verwendete Flüssigkeitspumpe, gestartet wird und somit eine Kühlung des Schweißbrenners 10 durch Förderung eines Kühlmediums bewirkt werden kann.

Das Schweißgerät 1 weist weiters eine Ein- und/oder Ausgabevorrichtung 22 auf, über die die unterschiedlichsten Schweißparameter, Betriebsarten oder Schweißprogramme des Schweißgerätes 1 eingestellt bzw. aufgerufen werden können. Dabei werden die über die Ein- und/oder Ausgabevorrichtung 22 eingestellten Schweißparameter, Betriebsarten oder Schweißprogramme an die Steuervorrichtung 4 weitergeleitet und von dieser werden anschließend die einzelnen Komponenten der Schweißanlage bzw. des Schweißgerätes 1 angesteuert bzw. entsprechende Sollwerte für die Regelung oder Steuerung vorgegeben werden.

Weiters ist in dem dargestellten Ausführungsbeispiel der Schweißbrenner 10 über ein Schlauchpaket 23 mit dem Schweißgerät 1 bzw. der Schweißanlage verbunden. In dem Schlauchpaket 23 sind die einzelnen Leitungen vom Schweißgerät 1 zum Schweißbrenner 10 angeordnet. Das Schlauchpaket 23 wird über eine Kupplungsvorrichtung 24 mit dem Schweißbrenner 10 verbunden, wogegen die einzelnen Leitungen im Schlauchpaket 23 mit den einzelnen Kontakten des Schweißgerätes 1 über Anschlussbuchsen bzw. Steckverbindungen verbunden sind. Damit eine entsprechende Zugentlastung des Schlauchpaketes 23 gewährleistet ist, ist das Schlauchpaket 23 über eine Zugentlastungsvorrichtung 25 mit einem Gehäuse 26, insbesondere mit dem Grundgehäuse des Schweißgerätes 1, verbunden. Selbstverständlich ist es möglich, dass die Kupplungsvorrichtung 24 auch für die Verbindung am Schweißgerät 1 eingesetzt werden kann.

Grundsätzlich ist zu erwähnen, dass für die unterschiedlichen Schweißverfahren bzw. Schweißgeräte 1, wie beispielsweise WIG-Geräte oder MIG/MAG-Geräte oder Plasmageräte nicht alle zuvor benannten Komponenten verwendet bzw. eingesetzt werden müssen. Hierzu ist es beispielsweise möglich, dass der Schweißbrenner 10 als lüftgekühlter Schweißbrenner 10 ausgeführt werden kann.

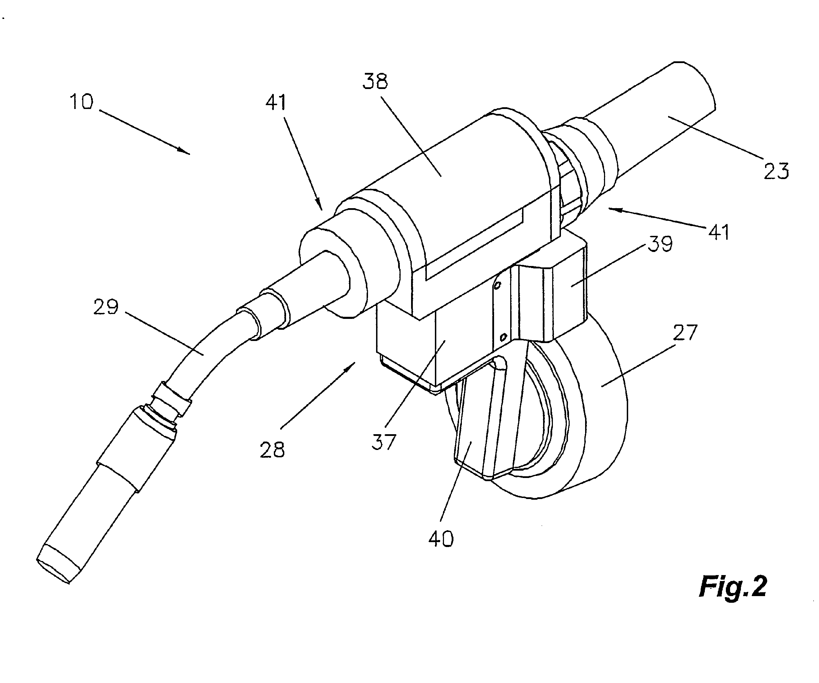

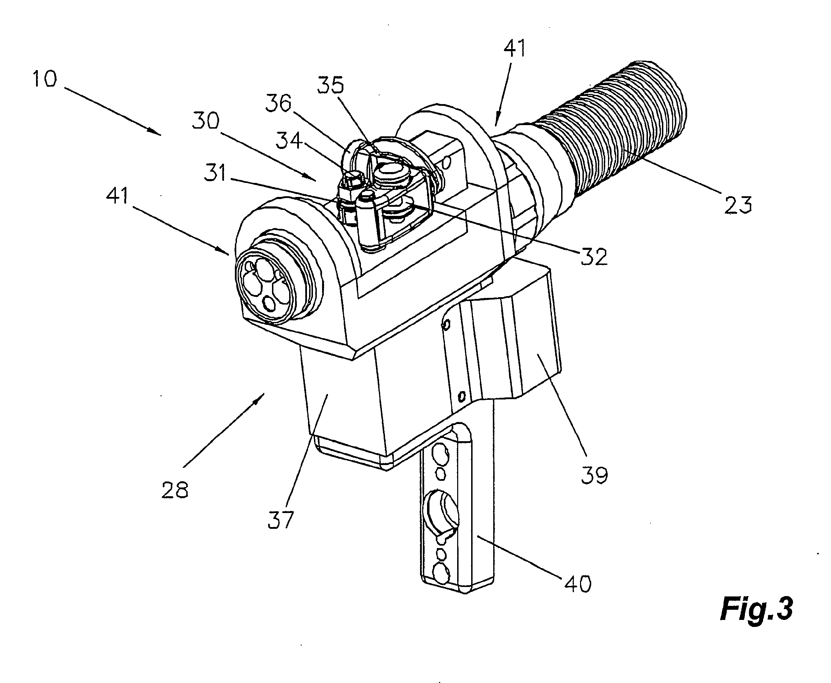

In den Fig. 2 bis 5 ist ein schematischer Aufbau eines erfindungsgemäßen Schweißbrenners 10 für eine Roboteranwendung dargestellt, wobei der Schweißbrenner 10 an einem Manipulator 27 eines Roboters, nicht dargestellt, befestigbar ist.

Der Schweißbrenner 10 weist zumindest ein Brennergehäuse 28 und bevorzugt einen daran befestigbaren Rohrbogen 29 auf, wobei im Brennergehäuse 28 eine Antriebseinheit 30 zur Förderung des Schweißdrahtes 13 angeordnet ist. Dabei ist die Antriebseinheit 30 aus zumindest einem Rollenpaar, insbesondere einer Antriebsrolle 31 und einer Druckrolle 32, und einem Antriebsmotor 33 gebildet. Um eine optimale Schweißdrahtförderung zu erreichen, ist es notwendig, dass über die Rollen, insbesondere die Druckrolle 32, eine definierte Druckkraft auf den Schweißdraht 13 aufgebaut wird. Dies kann beispielsweise derart erfolgen, dass die Druckrolle 32 über einen Schwenkhebel 34 beweglich gelagert ist, wobei der Schwenkhebel 34 über einen Spannhebel 35 fixiert wird. Die Spannkraft des Spannhebels 35 wird in einfacher Form durch eine Einstellvorrichtung 36, insbesondere eine Schraube, verändert, wobei der Spannhebel 35 den Schwenkhebel 34 mit der Druckrolle 32 in Richtung der Antriebsrolle 31 drückt. Damit wird nunmehr erreicht, dass die Druckrolle 32 über den drehbar gelagerten Schwenkhebel 34 gegen die Antriebsrolle 31 gepresst wird, sodass eine entsprechende Kraft beim Durchführen des Schweißdrahtes 13 auf diesen über die Antriebsrolle 31 und der Druckrolle 32 aufgebaut wird.

Bevorzugt ist das Brennergehäuse 28 aus mehreren Teilen, wie beispielsweise einem Grundkörper 37, einem Abdeckteil 38, einem Steuerelektronikteil 39, einer Brenneraufnahme 40 usw. gebildet. Weiters sind am Schweißbrenner 10 Kupplungsvorrichtungen 41 angeordnet, an denen der Rohrbogen 29 und das Schlauchpaket 23 angekoppelt werden können. Auf eine detaillierte Darstellung des Innenaufbaus für die Verlegung von Leitungen 42 und/oder Rohren zur Förderung der Medien, insbesondere der Kühlleitungen und der Gasversorgungsleitung und einer Leitung für die Schweißstromversorgung, usw., zwischen den Kupplungsvorrichtungen 41 wird übersichtshalber verzichtet, sodass entsprechende Befestigungsstellen und/oder Führungen nicht dargestellt wurden.

Bei dem erfindungsgemäßen Schweißbrenner 10 ist vorgesehen, dass ein Teil des Brennergehäuses 28 als Bestandteil der Antriebseinheit 33 ausgebildet ist, wobei ein Lager 43, 44 für die Lagerung des Rotors 45, insbesondere einer Motorwelle bzw. Motorwelle 46, am Brennergehäuse 28 zur Stabilisierung und Positionierung des Rotors 45 befestigt ist. Üblicherweise ist aus dem Stand der Technik der Antriebsmotor 33 als eigene Baueinheit, also mit einem eigenen Statorgehäuse, an dem die Lager 43, 44 für die Lagerung des Rotors 45 befestigt sind, aufgebaut, wobei der Antriebsmotor 33 aus dem Stand der Technik lediglich in das Brennergehäuse 28 als gesamte Einheit eingebaut bzw. befestigt wird.

Durch die erfindungsgemäße Integration der Antriebseinheit 30, insbesondere des Antriebsmotors 33, in das Brennergehäuse 28, insbesondere in den Grundkörper 37, wird erreicht, dass die Baugröße und das Gewicht des Schweißbrenners 10 wesentlich reduziert wird, wobei das Brennergehäuse 28 für die Stabilität des Antriebsmotors 33 verwendet wird, d.h., dass die bei einem Betrieb des Antriebsmotors 33 auftretenden Biegemomente und Lagerkräfte vom Brennergehäuse 28 aufgenommen werden, wogegen beim Stand der Technik diese auf das Statorgehäuse, über das beim Stand der Technik der Antriebsmotor 33 am Brennergehäuse 28 befestigt ist, übertragen werden, sodass ein relativ stabiles Statorgehäuse notwendig ist. Bei dem erfindungsgemäßen Aufbau bildet das Brennergehäuse 28 oder ein Teil des Brennergehäuses 28 das Statorgehäuse aus, wobei je nach Bauart der Antriebseinheit 30 ein Wicklungspaket, insbesondere die Statorwicklung 47 des Antriebsmotors 33, direkt in das Brennergehäuse 28, insbesondere im Grundkörper 37, eingebaut, insbesondere eingepresst, geklebt oder geschrumpft ist. Dabei ist es auch möglich, dass direkt im Brennergehäuse 28, insbesondere im Grundkörper 37, Magnete, insbesondere die Statormagnete, eingepresst bzw. eingebaut sind, wenn ein entsprechender Antriebsmotor 33 mit einem derartigen Aufbau verwendet wird. Bevorzugt wird dabei der Grundkörper 37 aus einem Teil gebildet. Im Grundkörper 37 wird für die Integration des Statorpaketes ein entsprechender Freiraum bzw. Öffnung 48 geschaffen, in dem die Statorwicklung 37 oder die Statormagnete eingepresst bzw. eingebaut werden.

Weiters ist direkt mit dem Brennergehäuse 28, insbesondere mit dem Grundkörper 37, mindestens ein Lager 43, 44, bevorzugt jedoch zwei Lager 43, 44, für den Rotor 45 des Antriebsmotors 33 verbunden, wobei der Rotor 45 als Motörwelle 46 mit einem Rotorpaket, insbesondere einer Rotorwicklung 49 oder einem Rotormagneten, ausgebildet ist, sodass die Motorwelle 46 über die Lager 43, 44 am Grundkörper 37 drehbar gelagert und das Rotorpaket innerhalb des Statorpaketes, insbesondere der Statorwicklung 47 oder Statormagnete, angeordnet ist. Zur Befestigung des Lagers 43, 44 wird bevorzugt ein Zwischenstück 50 bzw. Lagerschild eingesetzt, wobei an dem Brennergehäuse 28, insbesondere an dem Grundkörper 37, das Zwischenstück 50 mit dem darin integrierten Lager 43 befestigt ist. Hierbei ist es möglich, dass zur elektrischen Isolierung auf dem Zwischenstück 50 eine Isolierplatte 51 angeordnet ist. Selbstverständlich ist es auch möglich, dass das Zwischenstück 50 aus einem elektrisch nicht leitenden Material gebildet ist und das Lager 43, 44 in das Zwischenstück 50 eingebettet ist, sodass eine entsprechende Isolierebene gebildet wird.

Bei dem dargestellten Ausführungsbeispiel der Fig. 2 bis 5 ist die Öffnung 48 für das Statorpaket derart ausgebildet, dass dieses etwa den gleichen Durchmesser wie das Statorpaket, also die Statorwicklung 47, aufweist, wobei sich die Öffnung 48 über den gesamten Grundkörper 37 hindurch erstreckt. Damit ist es möglich, dass eine beidseitige Montage der Teile des Antriebsmotors 33 erfolgen kann. Im Endbereich der Öffnung 48 werden anschließend die Zwischenstücke 50 mit den Lagern 43, 44 montiert. Hierzu wird nach der Montage der Statorwicklung 47 der Rotor 45 in die Öffnung 48, also in den Stator eingesetzt, sodass anschließend die Lager 43, 44 auf der Motorwelle 46 befestigt werden und diese über das Zwischenstück 50 am Grundkörper 37 befestigt werden, sodass eine Stabilisierung und Positionierung des Rotors 45 im Zentrum des Statorpaketes erfolgt. Damit ist die Funktionalität eines handelsüblichen Antriebsmotors 33 gegeben, wobei sich wesentliche Vorteile durch die Integration in das Gehäuse des Schweißbrenners 10 ergeben.

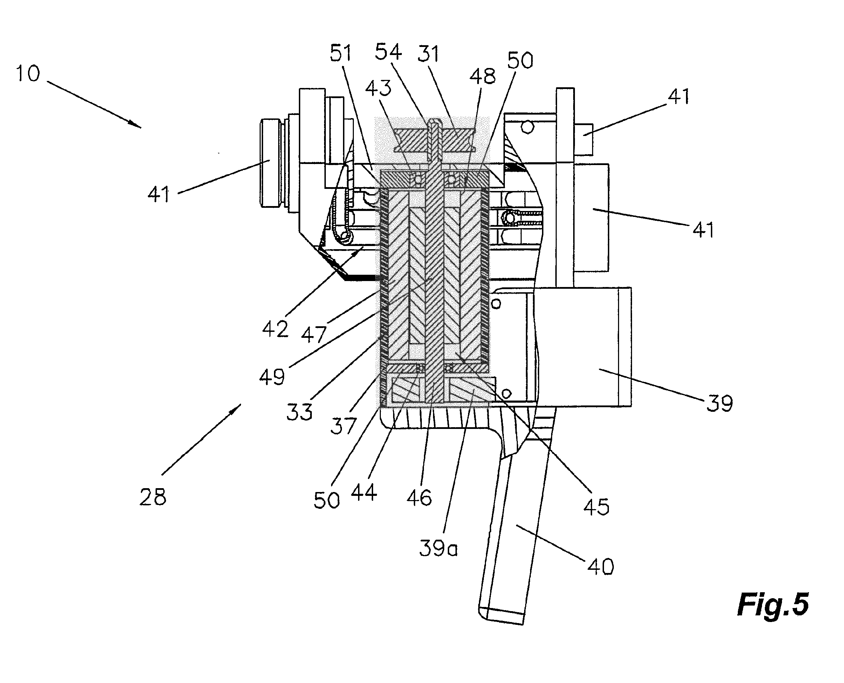

Um eine Förderung des Schweißdrahtes 13 zu ermöglichen, wird anschließend die Antriebsrolle 31 bevorzugt direkt mit der Motorwelle 46 verbunden, wie schematisch in Fig. 5 dargestellt wurde, und es kann die Druckrolle 32, die am Schwenkhebel 34 befestigt ist, montiert werden. Der Schweißdraht 13 kann mit der Antriebseinheit 30 entsprechend der Drehrichtung der Antriebsrolle 31 gefördert werden. Bei dem dargestellten Ausführungsbeispiel wird dabei der Schweißdraht 13 unabhängig vom Schlauchpaket 23 über einen eigenen Schweißdrahtförderschlauch, nicht dargestellt, zugeführt, der über eine weitere Kupplungsvorrichtung 41, insbesondere einen Schnellverschluss, am Schweißbrenner 10 angekoppelt wird. Die Verbindung der Antriebsrolle 31 mit dem Antriebsmotor 33 kann derart erfolgen, dass direkt an der Motorwelle 46, wie in Fig. 5 dargestellt, die Antriebsrolle 31 befestigt ist oder die Motorwelle 46 mit einem Getriebe, nicht dargestellt, verbunden ist und die Antriebsrolle 31 an das Getriebe gekoppelt ist. Beim Einsatz eines Getriebes kann die Förderkraft wesentlich verstärkt werden. Die Isolierplatte 51 und/oder das Zwischenstück 50 können in diesem Fall an der Stirnfläche des Getriebes angeordnet sein oder einfach entfallen.

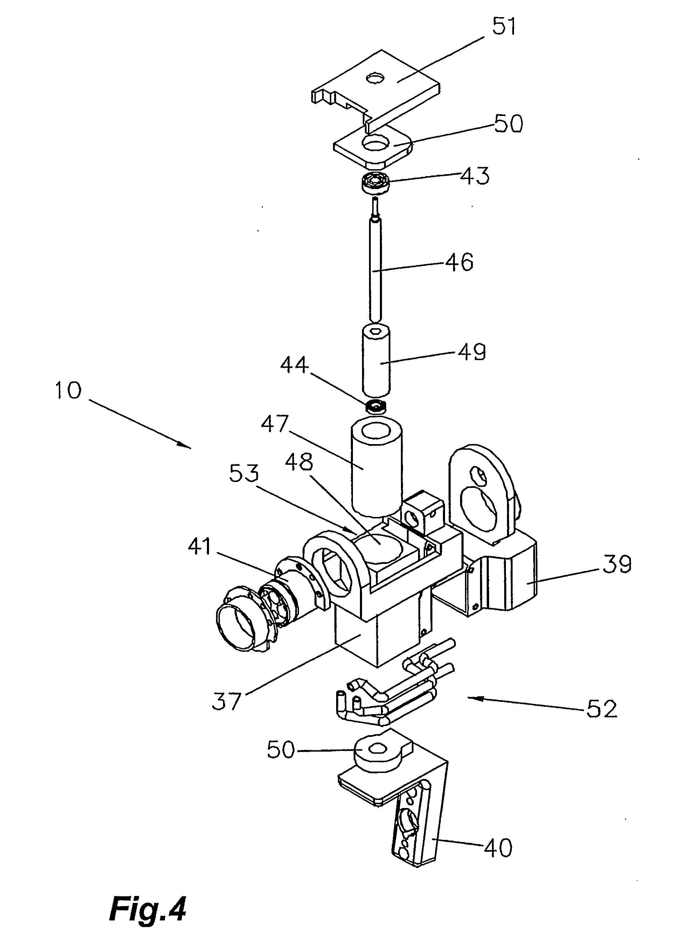

Um eine optimale Kühlung des Antriebsmotors 33 zu erreichen, ist es möglich, dass das Brennergehäuse 28, insbesondere der Grundkörper 27, als Kühlkörper ausgebildet, d.h., dass das Brennergehäuse 28 oder ein Teil davon, insbesondere der Grundkörper 37, aus einem wärmeleitenden Material, insbesondere aus Aluminium, gebildet ist, sodass eine sehr gute Ableitung der von der elektrischen Antriebseinheit 30 erzeugten Wärme möglich ist. Hierzu ist es auch möglich, dass im Bereich des Antriebmotors 33, also des Statorpaketes, das Brennergehäuse 28 bzw. der Grundkörper 37 Kühlkanäle, nicht dargestellt, aufweist, d.h., dass direkt im Material des Grundkörpers 37 Kühlkanäle eingearbeitet sind. Es ist auch möglich, dass zusätzlich oder anstelle der Kühlkanäle Kühlleitungen 52, wie in Fig. 4 schematisch angedeutet, angeordnet sind. Bevorzugt sind die Kühlkanäle und/oder die Kühlleitungen 52 über Leitungen mit einem Kühlkreislauf verbunden, sodass eine Kühlflüssigkeit bzw. ein Kühlgas oder Luft durch die Kühlkanäle bzw. Kühlleitungen 52 gefördert werden kann und somit die Wärme abgeleitet werden kann. Selbstverständlich ist es auch möglich, dass die Kühlkanäle bzw. die Kühlleitungen 52 mit der Gasversorgung des Schweißbrenners 10 gekoppelt werden können, sodass das Gas 8, insbesondere das Schutzgas, gleichzeitig für die Kühlung der Antriebseinheit 30 und zum Aufbau einer Schutzgas-Atmosphäre an der Schweißstelle verwendet wird. Durch den Einsatz von Kühlkanälen und/oder Kühlleitungen ist es auch möglich, dass das Brennergehäuse 28 bzw. der Grundkörper 37 aus einem schlecht wärmeleitenden Material, wie beispielsweise Kunststoff, aufgebaut werden kann und bei entsprechender Dimensionierung der Kühlkanäle bzw. Kühlleitungen genügend Wärme über das Kühlmedium abgeführt werden muss.

Bei der Ausbildung des Brennergehäuses 28, insbesondere des Grundkörpers 37, als Kühlkörper ist eine gute Luftkühlung wichtig, d. h., dass eine sehr große Oberfläche für die Luftkühlung geschaffen werden soll. Hierzu ist es möglich, dass das Brennergehäuse 28 bzw. der Grundkörper 37 an der Außenseite Kühlrippen 53, wie schematisch in Fig. 4 angedeutet, aufweist, um eine noch größere Oberfläche zu schaffen. Selbstverständlich ist es möglich, dass das Brennergehäuse 28 bzw. der Grundkörper 37 aus einem gut wärmeleitenden Material für eine Luftkühlung gebildet wird und gleichzeitig jedoch Kühlkanäle bzw. Kühlleitungen 52 für eine Flüssigkeitskühlung eingesetzt werden. Damit kann der Schweißbrenner 10 für sehr hohe Leistungen, insbesondere hohe Schweißströme, verwendet werden und trotzdem die Baugröße und das Gewicht gering gehalten werden, da eine sehr gute Kühlung möglich ist. Sollte jedoch ein Schweißbrenner 10 mit möglichst wenig Gewicht aufgebaut werden, so kann das Brennergehäuse 28 bzw. ein Teil davon aus Kunststoff gebildet werden, da über ein entsprechendes Kühlsystem die Verlustwärme abgeleitet wird.

Um den Antriebsmotor 33 bezüglich Drehzahl, Leistung und/oder Drehmoment zu steuern, kann im Brennergehäuse 28 eine Sensor- bzw. Steuerelektronik, nicht dargestellt, zur Steuerung und Regelung des Antriebsmotors 33 verwendet werden. Bei diesem dargestellten Ausführungsbeispiel ist ein eigenständiges Sensor- bzw. Steuerelektronikteil 39 mit dem Grundköper 37 verbunden. Die Steuerelektronik ist speziell in dem lösbar verbundenen Steuerelektronikteil 39 angeordnet, sodass ausreichend Platz vorhanden ist. Es ist natürlich möglich, dass die Steuerelektronik nicht in einem zusätzlichen Steuerelektronikteil 39 untergebracht wird, sondern direkt im Grundkörper 37, beispielsweise neben dem Antriebsmotor 33 integriert wird. Auf die Ausbildung und Funktion der Steuerelektronik wird nicht näher eingegangen, da hierzu jeder aus dem Stand der Technik bekannte Aufbau eingesetzt werden kann, wobei je nach Art des Antriebsmotors 33 verschiedenste Steuerelektroniken eingesetzt werden können. Durch die separate Anordnung in einem eigenen Steuerelektronikteil 39 ist es auch einfach möglich, die Steuerelektronik zu wechseln. Beispielsweise ist es möglich, dass der im Grundkörper 37 integrierte Antriebsmotor 33 als Synchronmotor oder Gleichstrommotor oder Schrittmotor ausgebildet ist. Durch den Einsatz eines zusätzlichen an den Grundkörper 37 kuppelbaren Steuerelektronikteils 39 ist es möglich, dass genügend Platz für die unterschiedlichen Steuerelektroniken vorhanden ist, sodass auch ein Umbau des Schweißbrenners 10 möglich ist bzw. dass bei Einsatz von mehr Steuerelektronik ein dementsprechend größeres Steuerelektronikteil 39 verwendet wird, ohne dass, wie dies oft bei den Schweißbrennern 10 aus dem Stand der Technik der Fall ist, der gesamte Schweißbrenner 10 getauscht werden muss, um eine andere Steuerelektronik einsetzen zu können. Es ist auch möglich, dass die Steuerelektronik für den Antriebsmotor 33 extern, insbesondere im Schweißgerät 1 oder einer Drahtfördervorrichtung 11 usw., angeordnet ist, die anschließend über Leitungen mit dem Antriebsmotor 33 verbunden wird, sodass der Steuerelektronikteil 39 entfallen kann. Selbstverständlich wäre es auch möglich, dass die Steuerung oder Regelung direkt von der Steuervorrichtung 4 des Schweißgerätes 1 oder einer anderen Steuervorrichtung einer anderen Komponente erfolgt, sodass keine zusätzliche Steuerelektronik für den Antriebsmotor 33 im Schweißbrenner 10 benötigt wird.

Weiters kann zur besseren Regelung oder Steuerung ein Drehgeber 39a, insbesondere ein Encoder, mit dem Rotor 45 oder der Antriebsrolle 31 verbunden werden. Als Drehgeber kann wiederum jeder aus dem Stand der Technik bekannte Drehgeber, z.B. ein inkrementaler Encoder, eingesetzt werden. Vorteilhaft ist weiters, dass die einzelnen Teile der Antriebseinheit 30 zur Erkennung der Kenndaten des Antriebsmotors 33 einen Speicherbaustein, wie beispielsweise einen Transponder, aufweisen können und somit eine automatische Erkennung erfolgen kann, sodass vom Schweißgerät 1 bzw. der Steuerelektronik die entsprechenden Programme und/oder Daten für die eingesetzte Antriebseinheit 30 geladen bzw..verwendet werden können.

Um die Sicherheit der Bauteile der Steuerelektronik sowie der anderen Teile des Antriebsmotors 33 und die Zuverlässigkeit des Schweißbrenners 10 zu gewährleisten, ist es vorteilhaft, wenn eine Isolierung zwischen Antriebsrolle 31 und Grundkörper 37 angeordnet ist, da die Übertragung des Schweißstromes auf den Schweißdraht üblicherweise über ein Kontaktrohr im Endbereich des Rohrbogens 29 erfolgt, wodurch das Schweißspannungspotential über den Schweißdraht 13 zu der Antriebsrolle 31 und somit zu dem Antriebsmotor 33 geleitet wird. Der hohe resultierende Schweißstrom bei einem Kurzschluss würde zu Zerstörungen einzelner Brennerkomponenten oder des gesamten Brenners führen, was durch die Anbringung einer Isolierung verhindert werden kann. Hierzu ist die Isolierung bevorzugt als Isolierschicht 54 aus einem elektrisch nichtleitenden Material ausgebildet, die zwischen Antriebsrolle 31 und Motorwelle 46 und/oder Motorwelle 46 und Rotorpaket und/oder Motorwelle 46 und Lager 43, 44 und/oder Rotorpaket und Stator und/oder Stator und Brennergehäuse 28 ausgebildet ist. Eine detaillierte Darstellung spezieller Isolieranordnungen wird noch in späteren Figuren gezeigt und beschrieben. Es ist auch möglich, dass die Antriebsrolle 31 und/oder Motorwelle 46 aus elektrisch nichtleitendem Material oder Teilen von elektrisch nichtleitendem Material besteht.

Bei dem gezeigten Ausführungsbeispiel der Fig. 2 bis 5 ist die Isolierschicht 54 über einen Teilbereich, insbesondere im Endbereich, auf der Motorwelle 46 aufgebracht, wobei in diesem Bereich der Isolierschicht 54 die Antriebsrolle 31 montiert wird. Somit wird eine Isolierung zwischen der Antriebsrolle 31 und dem Antriebsmotor 33, also zwischen Motorwelle 46 und Antriebsrolle 31, erzielt, wodurch verhindert wird, dass der Schweißstrom auf das Rotorpaket übertragen wird, sodass die restlichen Bauelemente ebenfalls vor dem Schweißstrom geschützt sind. Die Isolierschicht 54 kann beispielsweise aus Kunststoff oder Keramik gebildet sein. Es ist auch möglich, dass die gesamte Antriebsrolle 31 aus einem nicht elektrisch leitenden Material besteht, wodurch wiederum keine Stromübertragung auf die Motorwelle 46 stattfinden kann. Selbstverständlich ist es auch möglich, dass die Motorwelle 46 zweiteilig ausgebildet ist, wobei die beiden Teile durch eine isolierende Kupplung elektrisch voneinander getrennt verbunden sind.

Weiters ist es möglich, dass der Schweißbrenner 10 noch spezielle Ausbildungen aufweisen kann. Dabei ist es möglich, dass beispielsweise das Brennergehäuse 28 oder ein Teil davon, insbesondere der Grundkörper 37, als stromführender Teil, insbesondere zur Übertragung des Schweißstromes, ausgebildet ist, d.h., dass der Schweißstrom, der über das Schlauchpaket 23 zugeführt wird, über das elektrisch leitende Material bzw. Brennergehäuse 28 zum Rohrbogen 29 bzw. einem Anschlusselement für den Rohrbogen 29 geleitet wird. Somit kann das Stromkabel bzw. das Stromübertragungselement im Brennergehäuse 28 zwischen den beiden Kupplungsvorrichtungen 41 entfallen. Dabei ist es jedoch auch notwendig, dass das Gehäuseteil, über welches der Schweißstrom geführt wird, nach außen vor Berührung geschützt ist. Dies kann beispielsweise derart erfolgen, dass über das Brennergehäuse 28 oder über den stromführenden Teil eine Isolierschicht oder eine elektrisch nichtleitende Abdeckhaube, nicht dargestellt, aufgebracht ist. Bevorzugt wird auch zwischen der Brenneraufnahme 40, insbesondere dem Ansatzteil, und dem Brennergehäuse 28, insbesondere dem Grundkörper 37, eine Isolierschicht, nicht dargestellt, angeordnet, damit auf keinen Fall ein Kurzschluss über den Roboter, insbesondere den Manipulator 27, entstehen kann. Hierzu ist es möglich, dass die Brenneraufnahme 40 bzw. der Ansatzteil aus einem nicht elektrisch leitenden Material gebildet ist, wobei dabei darauf zu achten ist, dass die Brenneraufnahme 27 möglichst steif ausgeführt ist, damit der Schweißbrenner 10 immer in der gleichen Position bleibt.

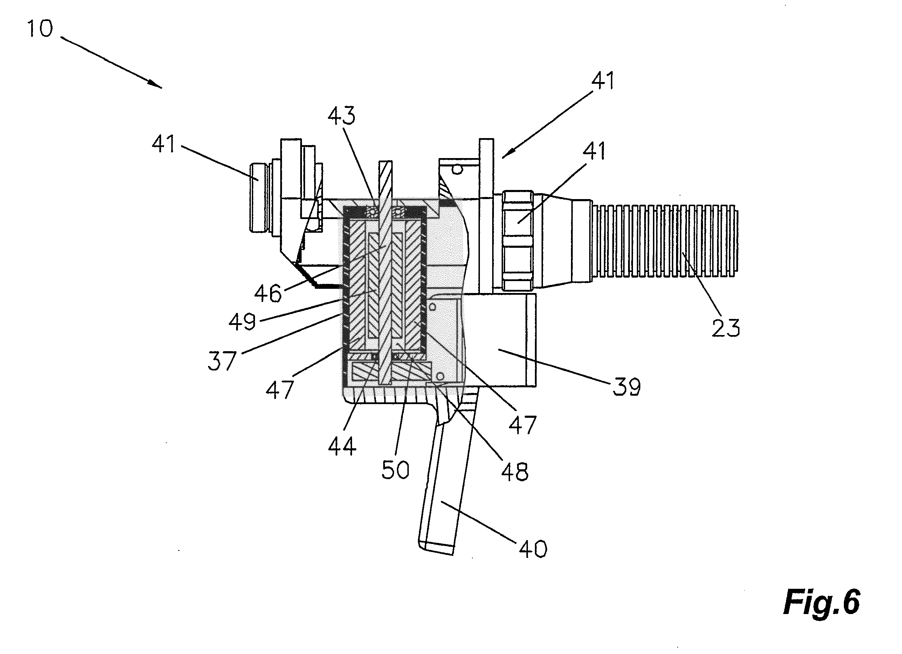

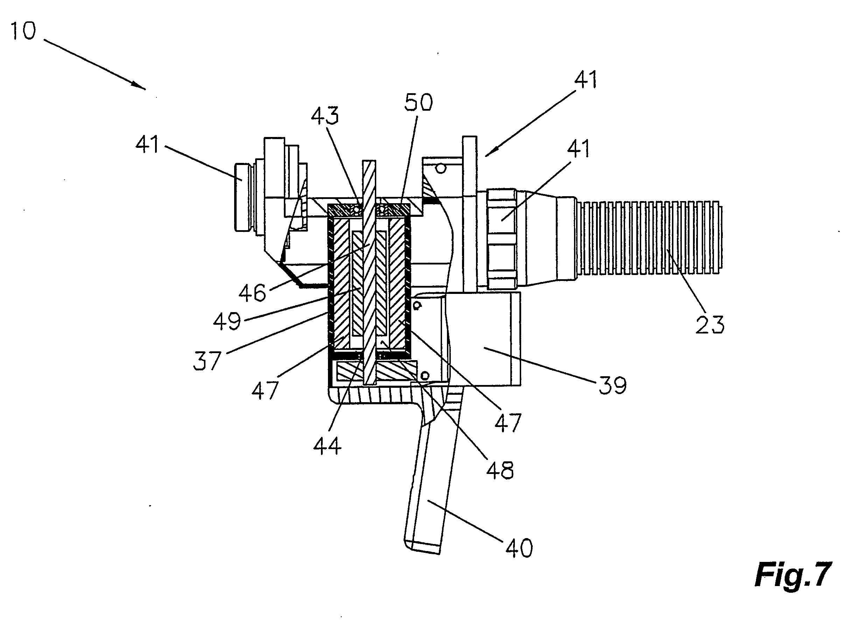

In den Fig. 6 und 7 sind zwei weitere Ausführungsbeispiele des Schweißbrenners 10 dargestellt. Der Unterschied zu dem Aufbau der Fig. 2 bis 5 liegt darin, dass nunmehr die Öffnung 48 im Grundkörper 37 nicht mehr im vollen Umfang durch den Grundkörper 37 hindurch geht, sondern auf einer Seite geschlossen ist, d.h., dass im Grundkörper 37 auf einer Seite der Öffnung 38 nur mehr eine Lagerungsbohrung oder ein Wellendurchgang angeordnet ist, an welchen das Lager 43 oder 44 direkt in den Grundkörper 37 montiert wird, wogegen die gegenüberliegende Seite der Öffnung 38 einen derart großen Durchmesser aufweist, dass der Stator, insbesondere die Statorwicklung 47 oder die Statormagnete, eingesetzt werden kann bzw. können. Damit wird erreicht, dass auf dieser Seite, wo das Lager 43, 44 direkt in den Grundkörper 37 montiert ist, auf ein zusätzliches Befestigungsmittel für die Lagerbefestigung, wie beispielsweise das Zwischenstück 50, verzichtet werden kann. Hierzu ist in Fig. 6 der Aufbau so gewählt, dass das der Antriebsrolle 31 nächstliegende Lager 43 direkt im Grundkörper 37 eingebettet ist, wogegen im Aufbau von Fig. 7 das Lager 44, also das weiter zur Antriebsrolle 31 entfernte Lager 44, im Grundkörper 37 angeordnet ist. Bei diesem Aufbau der Fig. 6 und 7 ist nunmehr die Montage der einzelnen Teile des Antriebsmotors 33 nur mehr von einer Seite möglich, wobei jedoch die Stabilität bzw. Steifigkeit des Brennergehäuses 28, insbesondere des Grundkörpers 37, verbessert wird.

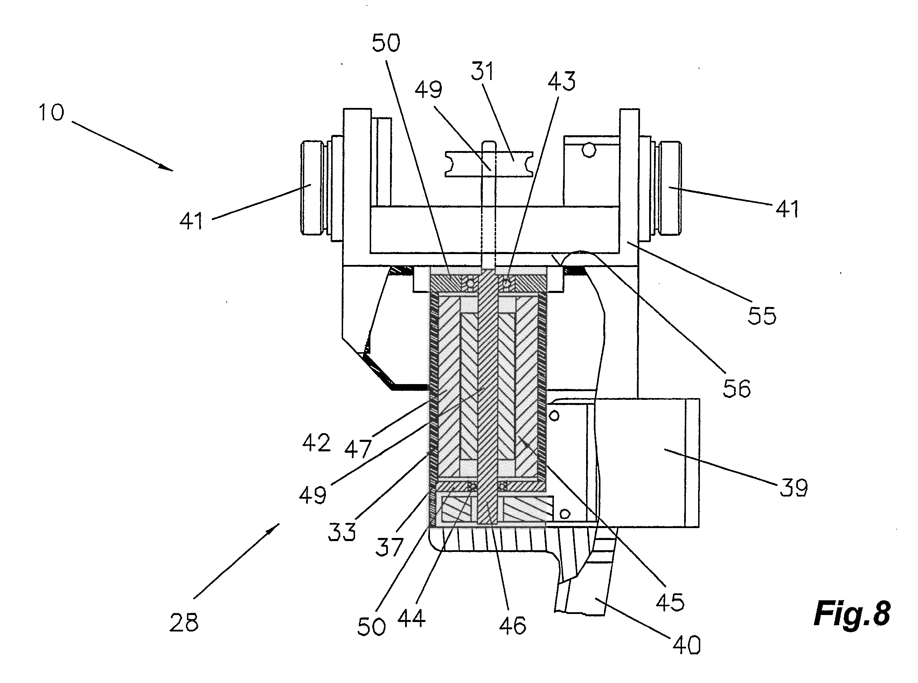

Gemäß dem Ausführungsbeispiel in Fig. 8 ist im Brennergehäuse 28 ein Montageelement 55 angebaut, an dem die benötigten Teile oder Führungen angebracht sind. Auf das Montageelement 55 wird beispielsweise das Abdeckteil 38 aufgesetzt, sodass ein Schutz vor Verschmutzung und Berührung der Teile gegeben ist. Der Schweißbrenner 10 ist dabei derart aufgebaut, dass der Antriebsmotor 33 im Grundkörper 37 integriert ist und der Grundkörper 37 auf jener Seite, wo die Motorwelle 46 zum Verbinden mit der Antriebsrolle 31 oder einem Getriebe vom Grundkörper 37 herausragt, die Montageebene 56 aufweist, an der das Montageelement 55 befestigt wird. Die Ausbildung der Montageebene 56 kann dabei beliebig gewählt werden. Beispielsweise kann diese durch eine ebene Fläche, wie dargestellt, erfolgen, sodass auf diese Montageebene 56 eine einfache Montageplatte bzw. das Montageelement 55 montiert werden kann. Selbstverständlich ist es auch möglich, dass die Montageebene 56 eine spezielle Kontur aufweist, auf der dann anschließend ein entsprechend ausgebildetes Montagelement 55 aufgesetzt wird.

Bei einer derartigen Ausbildung des Schweißbrenners 10 wird erreicht, dass auf dem Montageelement 55 sämtliche Teile bzw. Elemente, wie beispielsweise die Kupplungsvorrichtungen 41 für den Rohrbogen 29 und das Schlauchpaket 23, die Leitungen 42 zum Verbinden der beiden Kupplungsvorrichtungen 41, sowie die Lagerung der Druckrolle 32, unabhängig vom Grundkörper 37 aufgebaut bzw. montiert werden können. Im Grundkörper 37 werden hingegen die Teile für den Antriebsmotor 33 montiert. Anschließend müssen die beiden Teile, also der Grundkörper 37 und das Montageelement 55, lediglich miteinander verbunden werden, um einen funktionsfähigen Schweißbrenner 10 zu erhalten.

Damit wird in vorteilhafter Weise erreicht, dass eine sehr einfache und schnelle Montage des Schweißbrenners 10 erzielt wird. Ein weiterer Vorteil liegt darin, dass ein standardisierter Aufbau des Grundkörpers 37 mit dem Antriebsmotor 33 verwendet wird, auf dem anschließend unterschiedliche Aufbauten unterschiedlicher Ausführungen des Schweißbrenners 10 montiert werden können, sodass keine unterschiedlichen kompletten Brennergehäuse 28 für die verschiedensten Schweißbrennertypen mehr benötigt werden. Somit können erhebliche Kosteneinsparungen erzielt werden, da der Aufbau des Schweißbrenners 10 immer auf den standardisierten Grundkörper 37 erfolgt und lediglich das Montageelement 55 für die verschiedensten Schweißbrennertypen unterschiedlich aufgebaut werden muss.

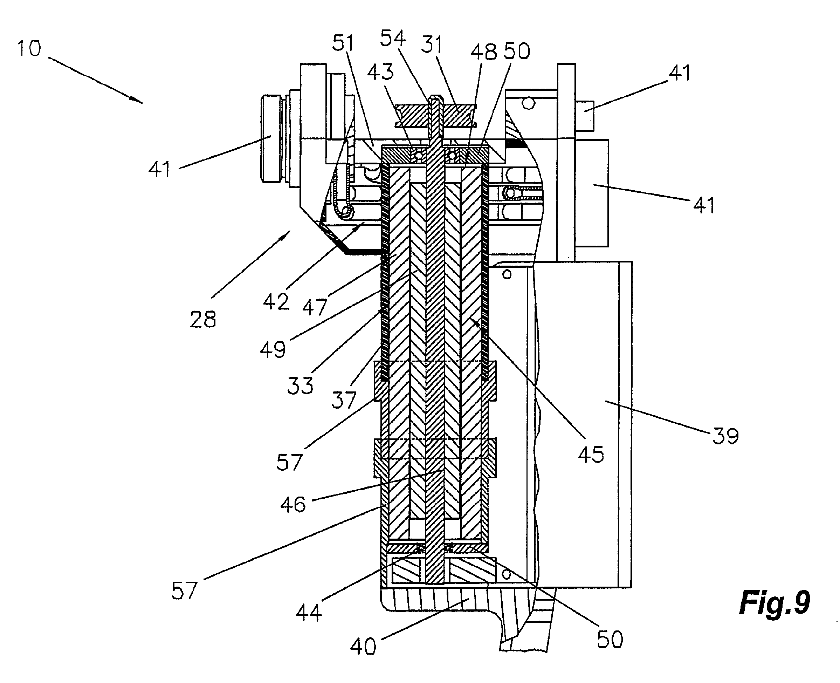

In den Fig. 9 bis 11 ist eine Ausführungsvariante dargestellt, bei dem der Schweißbrenner 10 modular erweiterbar ist bzw. die Leistung des Antriebsmotors 33 in einfacher Form angepasst werden kann.

Hierzu ist der Antriebsmotor 33, insbesondere die Statorwicklung 47 oder die Statormagneten und/oder Rotorwicklung 49 oder Rotormagneten, durch zusätzliche Module 57 erweiterbar, insbesondere um die Leistung und das Ansprechverhalten des Antriebsmotors 33 anzupassen. Dies geschieht beispielsweise derartig, dass, wie in Fig. 9 ersichtlich, lediglich ein oder mehrere Module 57 an den Grundkörper 37 angekoppelt werden, sodass anschließend eine entsprechend längere Statorwicklung 47 und ein entsprechender Rotor 45 eingebaut werden können. Somit wird in vorteilhafter Weise erreicht, dass für unterschiedlichste Leistungen des Antriebsmotors 33 immer das gleiche Brennergehäuse 28 bzw. der gleiche Grundkörper 37 verwendet wird, wobei durch Erweiterung des Grundkörpers 37 mit den Modulen 57 ein entsprechend größerer bzw. leistungsstärkerer Antriebsmotor 33 eingebaut werden kann. Somit können die Kosten des Schweißbrenners 10 gering gehalten werden, da immer das gleiche Brennergehäuse 28 verwendet werden kann und nicht für die unterschiedlichsten Antriebsmotoren 33 unterschiedliche Brennergehäuse 28 benötigt werden.

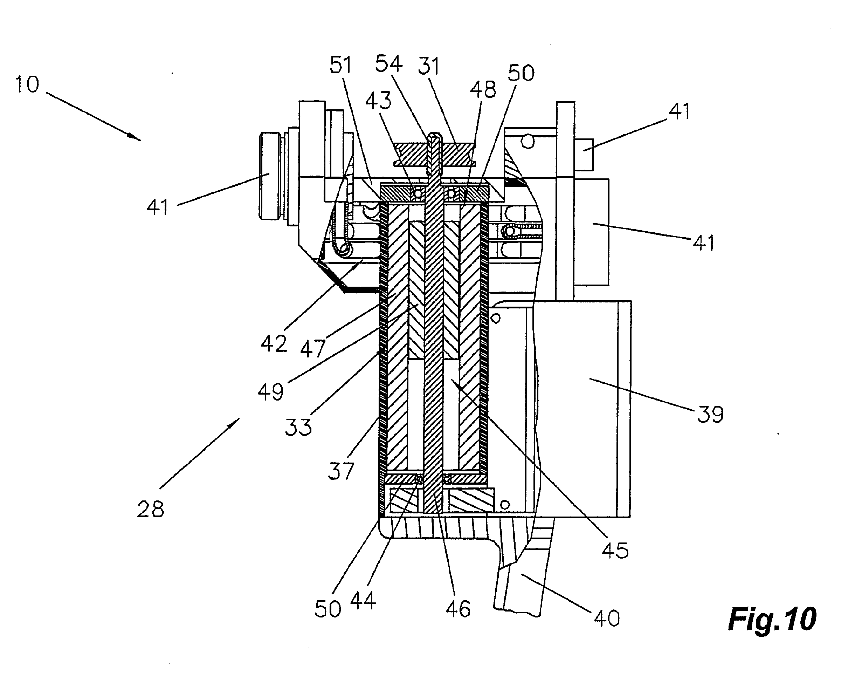

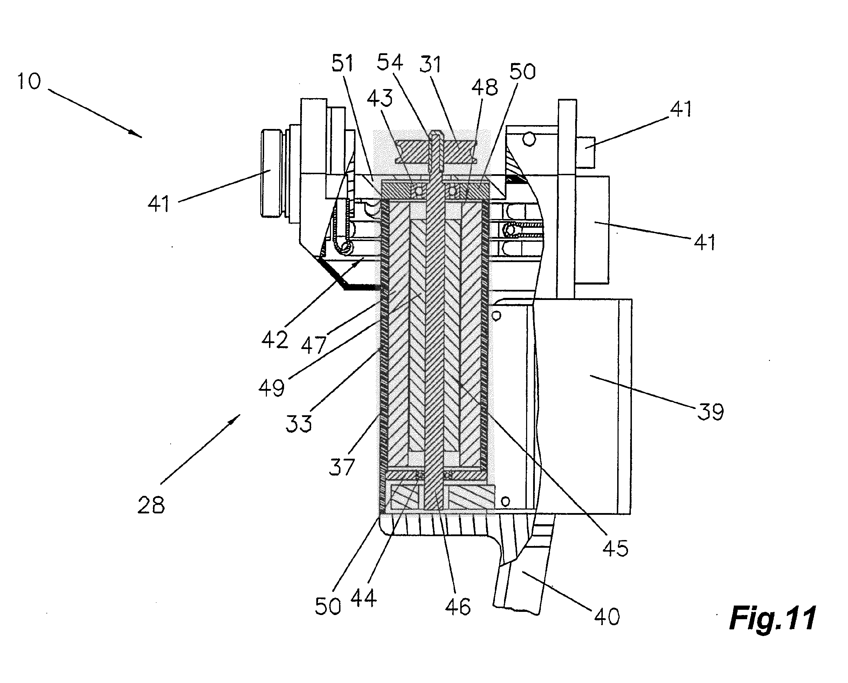

Eine spezielle Anpassung der Leistung bzw. des Ansprechverhaltens des Antriebsmotors 33 ist aus den Fig. 10 und 11 ersichtlich. Hierbei wird der Grundkörper 37 für eine entsprechende Statorwicklung 47 dimensioniert, wobei über den Rotor die Leistung bzw. das Ansprechverhalten des Antriebsmotors 33 bestimmt wird. Dies geschieht derartig, dass beispielsweise für ein sehr gutes Ansprechverhalten des Antriebsmotors 33 ein kleineres Rotorpaket, insbesondere eine kleine Rotorwicklung 49 eingesetzt wird, wie dies in Fig. 10 dargestellt ist. Damit reagiert der Antriebsmotor 33 sehr rasch auf eine vorgegebene Drehzahländerung oder Drehrichtungsumkehr. Wird jedoch eine höhere Leistung benötigt, so muss nunmehr lediglich der Rotor ausgewechselt werden und durch einen Rotor mit einem größeren Rotorpaket, insbesondere Rotorwicklung 49, eingesetzt werden, wie dies in Fig. 11 ersichtlich ist.

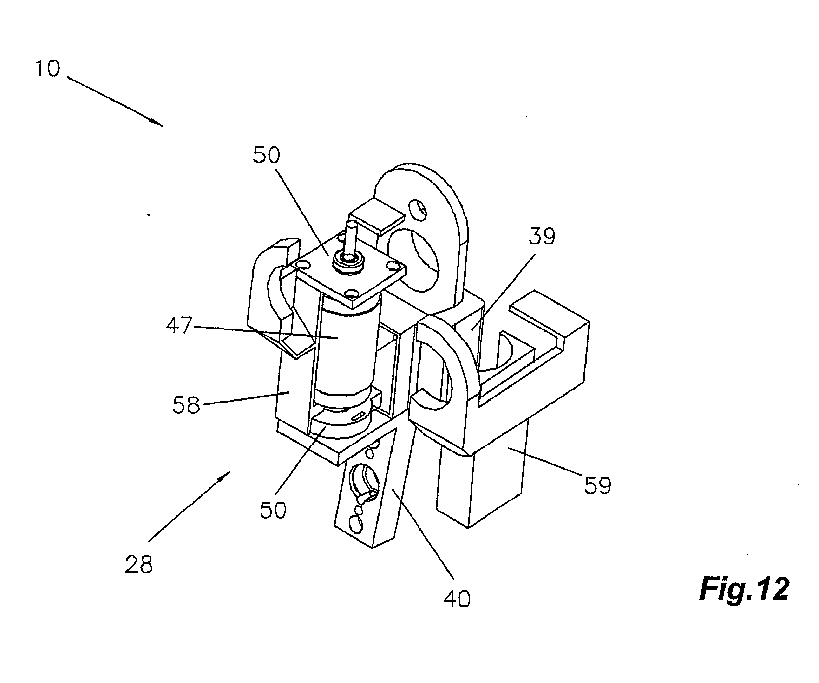

In Fig. 12 ist ein weiteres Ausführungsbeispiel für einen Aufbau zum Integrieren des Antriebsmotors 33 im Schweißbrenner 10, insbesondere in den Grundkörper 37, dargestellt. Hierbei ist nunmehr das Brennergehäuse 28 entlang einer Rotorachse geteilt, d.h., dass der Grundkörper 37 nunmehr aus zwei Halbschalen 58, 59 gebildet wird, in dem der Antriebsmotor 33 integriert wird. Durch diesen Aufbau wird erreicht, dass nunmehr eine sehr einfache Montage erzielt wird, da in einer Halbschale 58 oder 59 lediglich die Teile des Antriebsmotors 33 eingelegt werden müssen und anschließend durch Befestigen der zweiten Halbschale 59 oder 58 an der ersten Halbschale 58 oder 59 die Teile fixiert bzw. befestigt werden.

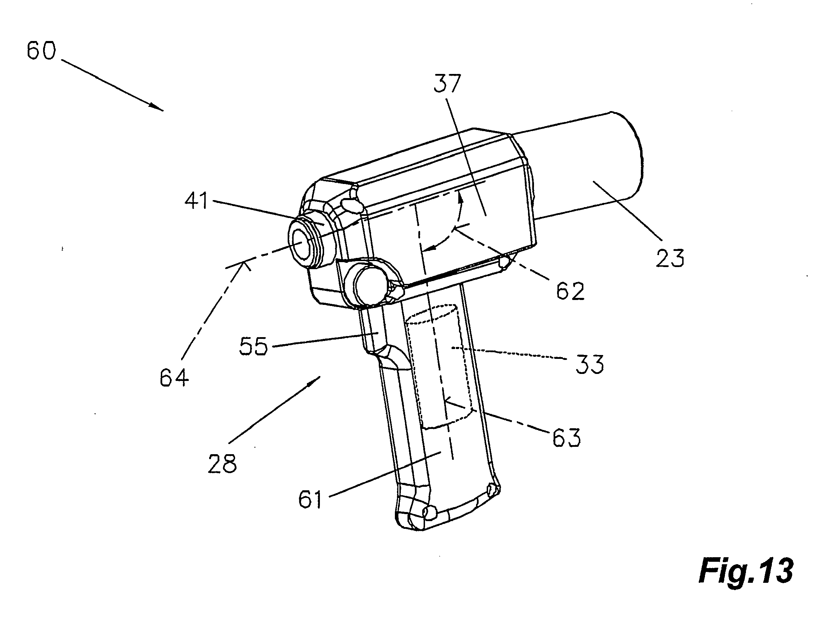

Weiters ist es auch möglich, dass der Aufbau mit der Integration des Antriebsmotors 33 in das Brennergehäuse 28 auch bei einem Handschweißbrenner 60 durchgeführt wird, wie dies schematisch in Fig. 13 dargestellt ist. Das Brennergehäuse 28 ist in Form eines Pistolen-Schweißbrenners ausgebildet, wobei im Bereich des Griffes 61 der Antriebsmotor 33 in das Brennergehäuse 28 eingebaut ist, wie dies strichliert schematisch dargestellt ist. Hierzu ist der Antriebsmotor 33, insbesondere die Motorwelle 46, wiederum in einem Winkel 62 von ca. 90° zum Schweißdraht 13 angeordnet, d.h., dass eine im Mittel der Motorwelle 46 verlaufende Rotorachse 63 zu einer im Mittel des Schweißdrahtes 13 verlaufenden Schweißdrahtförderachse 64 in dem Winkel 62 von 90° zueinander ausgerichtet sind. Eine derartige Ausrichtung des Antriebsmotors 33 zu dem Schweißdraht 13 ist auch in den vorhergehenden Fig. 1 bis 12 gegeben. Damit ist es wiederum möglich, dass die Antriebsrolle 31 direkt auf die Motorwelle 46 montiert wird und somit ein Direktantrieb für die Schweißdrahtförderung realisiert werden kann.

Es ist jedoch auch möglich, dass der Schweißbrenner 10, insbesondere der Handschweißbrenner 60, anders ausgebildet wird, bei dem nicht mehr, wie in den zuvor beschriebenen Fig. 1 bis 13, die Rotorachse 63 zur Schweißdrahtförderachse 64 in einem Winkel von 90° zueinander ausgerichtet ist, sondern die Ausrichtung der Rotorachse 63 zur Schweißdrahtförderachse 64 zentrisch bzw. parallel verläuft. Ein derartiges Ausführungsbeispiel wurde jedoch nicht dargestellt, da hierzu lediglich der Grundkörper 37 entsprechend ausgebildet werden muss, um den Antriebsmotor 33 darin zu integrieren. Dies kann beispielsweise bei einem Schweißbrenner 10 bzw. einem Handschweißbrenner 60 mit einem Planetarantrieb für die Schweißdrahtförderung verwendet werden, wobei hierzu die Motorwelle 46 axial zum Schweißdraht 13, insbesondere zu einer Schweißdrahtförderachse 64, angeordnet ist und der Schweißdraht 13 durch die Motorwelle 46, die hohl ausgebildet ist, verläuft. Es ist natürlich auch möglich, den Antriebsmotor 33 parallel und nicht in der Schweißdrahtachse anzuordnen und in den Grundkörper 37 zu integrieren.

Grundsätzlich ist zu erwähnen, dass in den zuvor gezeigten Ausführungsbeispielen der Fig. 1 bis 13 im Brennergehäuse 28 bzw. Grundkörper 37 zumindest ein oder mehrere Schaltelemente, nicht dargestellt, integriert sind, welche(s) zur Steuerung oder Regelung des Schweißprozesses diente(n), wie dies bereits aus dem Stand der Technik bekannt ist. Weiters ist es möglich, dass mehrere Antriebsmotoren 33 im Brennergehäuse 28 bzw. im Grundkörper 37 angeordnet sind, die wiederum im Brennergehäuse 28 integriert sind. Hierbei ist es auch möglich, dass nur ein Antriebsmotor 33 im Brennergehäuse 28 integriert ist und ein oder mehrere weitere Antriebsmotoren entsprechend dem Aufbau des Standes der Technik mit einem Statorgehäuse zusätzlich in das Brennergehäuse 28 eingebaut werden. Durch die Integration bzw. den Einsatz mehrerer Antriebsmotoren 33 kann somit ein Schweißbrenner 10 mit einem Mehrrollenantrieb aufgebaut werden. Es ist auch möglich, dass, wie aus dem Stand der Technik bekannt, nur eine Antriebsrolle 31 mit einem Antriebsmotor 33 eingesetzt wird, jedoch weitere Rollen entsprechend mit der Antriebsrolle 31 gekoppelt sind, d.h., dass beispielsweise durch den Einsatz von Zahnrädern eine entsprechende Koppelung der einzelnen Rollen durchgeführt wird, wodurch über den einen eingesetzten Antriebsmotor 31 eine entsprechende Kraftübertragung an alle bzw. einen Teil der Rollen durchgeführt wird.

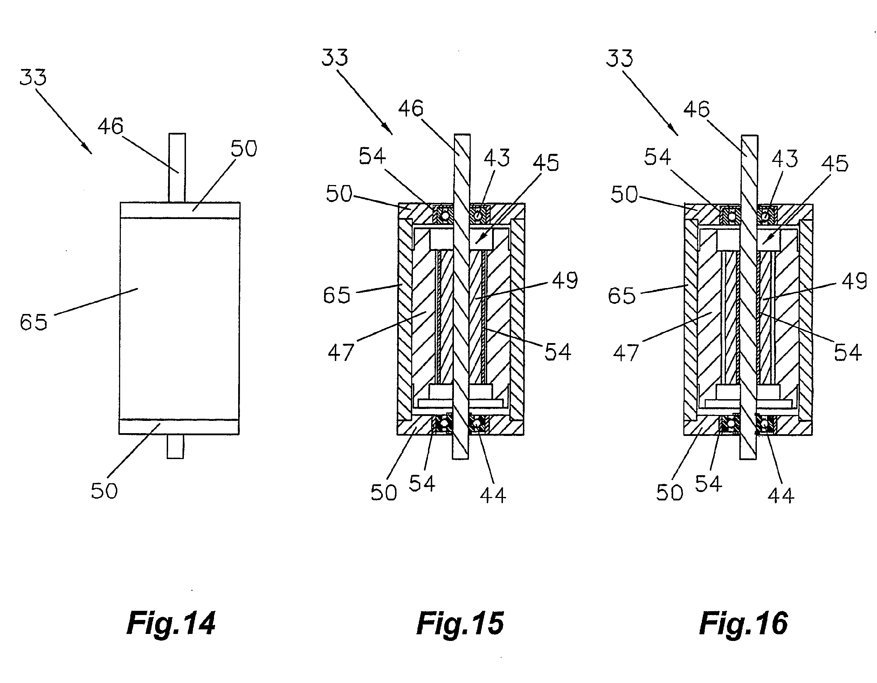

In den Fig. 14 bis 19 ist ein eigenständiger Antriebsmotor 33 in unterschiedlichen Aufbauvarianten dargestellt. Hierbei ist der Antriebsmotor 33 nunmehr als eigenständige Baueinheit, also mit einem Statorgehäuse 65, aufgebaut.

Dabei enthält der Antriebsmotor 33 das Statorgehäuse 65, an dessen Stirnseite jeweils ein Lagerschild bzw. ein Zwischenstück 50 mit einem darin integrierten Lager 43, 44 befestigt ist. Im Inneren des Statorgehäuses 65 ist das Statorpaket, insbesondere eine Statorwicklung 47, angeordnet. Weiters umfasst der Antriebsmotor 33 einen Rotor 45, der aus einer Motorwelle 46 mit einem darauf befestigten Rotorpaket, insbesondere einem Rotormagneten 49, gebildet ist. Der Rotor 45 wird im Zentrum des Statorpaketes bzw. des Statorgehäuses 65 angeordnet, sodass das Rotorpaket innerhalb des Statorpaketes angeordnet ist. Der Rotor 45 wird über die Lager 43, 44 drehbar gehalten.

Erfindungsgemäß ist nunmehr vorgesehen, dass der Antriebsmotor eine spezielle elektrische Isolierung aufweist, die in unterschiedlichen Bereichen des Antriebsmotors 33 angeordnet sein kann, wobei die elektrische Isolierung durch die Isolierschicht 54 gebildet ist. Speziell ist vorgesehen, dass zumindest ein Teil der Motorwelle 46, insbesondere der Aufnahmebereich der Antriebsrolle 31, von einem Gehäuse, insbesondere dem Statorgehäuse 65 oder dem Grundkörper 37 einer externen Komponente wie dem Schweißbrenner 10, elektrisch isoliert ist. Hierzu ist zu erwähnen, dass dieser Aufbau des erfindungsgemäßen Antriebsmotors 33 mit der Isolierschicht 54 auch bei den zuvor beschriebenen Ausführungsbeispielen der Fig. 1 bis 13 zum Einsatz kommen kann, wobei hierzu lediglich das Statorgehäuse 65 entfernt wird, sodass die restlichen Teile des Antriebsmotors 33 in das Brennergehäuse 28, insbesondere in den Grundkörper 37, eingebaut werden können. Durch die Anordnung der Isolierschicht 54 wird erreicht, dass ein elektrisches Potential an einem Teilbereich der Motorwelle 46 vom Statorgehäuse 65 oder Grundkörper 37 getrennt wird und somit kein Strom über Bauteile des Antriebsmotors 33 oder die Schnittstellen zu dem Schweißbrenner 10 fließen kann. Ein Vorteil liegt auch darin, dass beim Einsatz in der Schweißtechnik dadurch die Antriebsrolle 31 direkt an der Motorwelle 46, ohne zusätzlich anzuordnende Isolierung, montiert werden kann, was den Fertigungsaufwand und somit die Kosten reduziert.

Bei der in Fig. 15 dargestellten Ausführungsform ist die Isolierschicht 54 am Außenumfang des Rotorpaketes, insbesondere der Rotormagneten 49, angeordnet. Gleichzeitig sind die Lager 43, 44 gegenüber dem Statorgehäuse 65 ebenfalls mit einer entsprechenden Isolierschicht 54 isoliert. Wird nunmehr beispielsweise eine elektrisch leitende Antriebsrolle 31 direkt an der Motorwelle 46 befestigt, so kann sich zwar ein Stromfluss von der Antriebsrolle 31 über die Motorwelle 46 und die Rotormagneten 49 ausbreiten, jedoch wird dieser Stromfluss anschließend aufgrund der Isolierschichten 54 gestoppt, sodass ein Übergreifen auf die Statorwicklung 47 und das Statorgehäuse 65 verhindert wird. Der zwangsläufige oder ursprünglich vorhandene Luftspalt im Antriebsmotor 33 ist für eine den sicherheitstechnischen Anforderungen genügende Isolierung nicht ausreichend.

In Fig. 16 ist die Isolierschicht zwischen Motorwelle 46 und Rotorpaket, insbesondere den Rotormagneten 49, angeordnet, und zusätzlich sind die Lagerstellen, insbesondere die Lager 43, 44, isoliert ausgeführt, sodass nunmehr kein Stromfluss über die Motorwelle 46 zum Stator stattfinden kann.

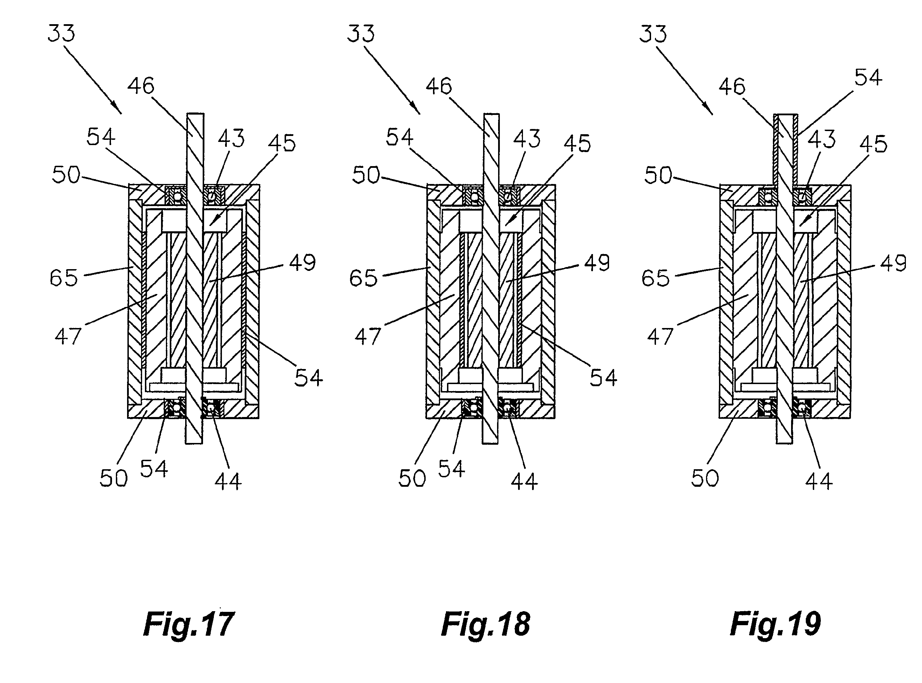

Gemäß der Ausbildung in Fig. 17 ist die Isolierschicht 54 zwischen dem Statorgehäuse 65 und dem Statorpaket, insbesondere dem Statorwicklungskörper, angeordnet, wobei hierzu wiederum die Lager 43, 44, gegenüber dem Statorgehäuse 65 elektrisch isoliert sind.

Aus Fig. 18 ist ersichtlich, dass die Isolierschicht an der Innenfläche der Statorwicklung, insbesondere an jener Seite, die dem Rotormagneten 49 zugewandt ist, angeordnet ist und zusätzlich die Lagerstelle, insbesondere die Lager 46, 47, isoliert ausgeführt ist bzw. sind.

Es ist aber auch möglich, gemäß Fig. 19, dass die Isolierschicht 54 nur über einen Teilbereich der Motorwelle 46, insbesondere im Endbereich der Antriebsrolle 31, aufgetragen bzw. angeordnet ist, d.h., dass in jenem Bereich, an dem ein stromführendes Teil anliegt bzw. befestigt ist, die Isolierschicht 54 angeordnet wird. Da bei einem Einsatz in der Schweißtechnik der Schweißdraht 13 mit Strom beaufschlagt wird, tritt ein Stromfluss über den Schweißdraht 13 zu der Antriebsrolle 31 auf. Wird nunmehr die Antriebsrolle 31 direkt auf die Motorwelle 46 montiert, so kann ein entsprechender Stromfluss von der Antriebsrolle 31 zur Motorwelle 46 stattfinden. Durch die Anordnung der Isolierschicht 54 im Montagebereich der Antriebsrolle 31 kann dies auf einfache Art und Weise verhindert werden. Bei dieser Lösung ist es auch nicht erforderlich, dass die Lagerung, insbesondere die Lager 43, 44, gegenüber dem Statorgehäuse 65 elektrisch isoliert werden muss bzw. müssen, da in keiner Weise ein Stromfluss auf den Antriebsmotor 31 einwirken kann.

Bei der Isolierung der Lager 43, 44, wie in den Fig. 14 bis 19 gezeigt, ist es möglich, dass die Lagerstelle, insbesondere das Lager 43 bzw. 44, in eine isolierende Hülse eingepresst ist. Es ist aber auch möglich, dass die Lagerstelle, insbesondere die Lager 43, 44, durch ein isolierendes Hybridlager gebildet wird bzw. werden, bei der Keramik-Wälzkörper eingesetzt werden oder ein Lagerring aus nicht elektrisch leitendem Material gebildet ist.
Selbstverständlich ist es auch möglich, dass die Motorwelle 46 aus einem elektrisch nicht leitenden Material, insbesondere aus Keramik, besteht, wodurch der gleiche elektrisch isolierende Effekt erzielt wird, jedoch die Isolierschichten 54 eingespart werden können.

## Patentansprüche

1. Schweißbrenner mit einem Brennergehäuse (28), wobei im Brennergehäuse eine aus zumindest einer Antriebsrolle (31) und einer Druckrolle (32) und einem Antriebsmotor (33) gebildete Antriebseinheit (30) zur Förderung eines Schweißdrahtes (13) angeordnet ist, **dadurch gekennzeichnet, dass** ein Teil des Brennergehäuses (28) als Statorgehäuse des Antriebsmotors (33) der Antriebseinheit (30) ausgebildet ist, und dass am Brennergehäuse (28) Lager (43, 44) zur Stabilisierung und Positionierung eines Rotors (45) des Antriebsmotors (33) vorgesehen sind.

2. Schweißbrenner nach Anspruch 1, **dadurch gekennzeichnet, dass** das Brennergehäuse (28) aus mehreren Teilengebildet ist.

3. Schweißbrenner nach Anspruch 2, **dadurch gekennzeichnet, dass** das Brennergehäuse (28) aus einem Grundkörper (37), einem Abdeckteil (38), einem Ansatzteil bzw. einer Brenneraufnahme (40) gebildet ist.

4. Schweißbrenner nach Anspruch 3, **dadurch gekennzeichnet, dass** der Grundkörper (37) aus einem Teil gebildet ist, der einen Freiraum bzw. eine Öffnung (48) zur Aufnahme der Einzelteile des Antriebsmotors (33) aufweist und an dem weitere Elemente befestigbar sind.

5. Schweißbrenner nach Anspruch 1, **dadurch gekennzeichnet, dass** direkt im Brennergehäuse (28) eine Statorwicklung (47) des Antriebsmotors (33) eingebaut ist.

6. Schweißbrenner nach einem der Ansprüche 1 bis 5, **dadurch gekennzeichnet, dass** direkt im Brennergehäuse (28) Statormagnete des Antriebsmotors (33) eingebaut sind.

7. Schweißbrenner nach einem der Ansprüche 1 bis 6, **dadurch gekennzeichnet, dass** die Lager (43, 44) direkt im Brennergehäuse (28) integriert sind.

8. Schweißbrenner nach einem der Ansprüche 1 bis 7, **dadurch gekennzeichnet, dass** die Lager (43, 44) in einem Zwischenstück (50) montiert sind und das Zwischenstück (50) direkt am Brennergehäuse (28) befestigt ist.

9. Schweißbrenner nach einem der Ansprüche 1 bis 8, **dadurch gekennzeichnet, dass** ein Lager (43 oder 44) fix mit dem Brennergehäuse (28) verbunden ist und ein weiteres Lager (43 oder 44) abnehmbar befestigt ist.

10. Schweißbrenner nach einem der Ansprüche 1 bis 9, **dadurch gekennzeichnet, dass** der Rotor (45) als Motorwelle (46) mit einer Rotorwicklung (49) oder einem Rotormagneten ausgebildet ist.

11. Schweißbrenner nach einem der Ansprüche 8 bis 10, **dadurch gekennzeichnet, dass** a auf dem Zwischenstück (50) eine Isolierplatte (54) befestigt ist.

12. Schweißbrenner nach Anspruch 10 oder 11, **dadurch gekennzeichnet, dass** direkt an der Motorwelle (46) die Antriebsrolle (31) befestigt ist.

13. Schweißbrenner nach Anspruch 10 oder 11, **dadurch gekennzeichnet, dass** die Motorwelle (46) mit einem Getriebe verbunden ist und am Getriebe die Antriebsrolle (31) gekoppelt ist.

14. Schweißbrenner nach Anspruch 9, **dadurch gekennzeichnet, dass** das Getriebe anstelle des Zwischenstückes (50) oder zusätzlich zu dem Zwischenstück (50) angeordnet ist, und das Getriebe am Brennergehäuse (28) oder am Zwischenstück (50) oder an der Isolierplatte (54) befestigt ist.

15. Schweißbrenner nach einem der Ansprüche 1 bis 14, **dadurch gekennzeichnet, dass** das Brennergehäuse (28) als Kühlkörper für den Antriebsmotor (33) ausgebildet ist.

16. Schweißbrenner nach einem der Ansprüche 1 bis 15, **dadurch gekennzeichnet, dass** im Bereich des Antriebmotors (33) im Brennergehäuse (28) Kühlkanäle und/oder Kühlleitungen (52) vorgesehen sind.

17. Schweißbrenner nach einem der Ansprüche 1 bis 16, **dadurch gekennzeichnet, dass** das Brennergehäuse (28) an der Außenseite Kühlrippen (53) aufweist.

18. Schweißbrenner nach einem der Ansprüche 1 bis 17, **dadurch gekennzeichnet, dass** das Brennergehäuse (28) in Form eines Pistolen-Schweißbrenners für einen Handschweißbrenner (60) mit einem Griff (61) ausgebildet ist und der Antriebsmotor (33) im Bereich des Griffes (61) in das Brennergehäuse (28) eingebaut ist.

19. Schweißbrenner nach einem der Ansprüche 1 bis 18, **dadurch gekennzeichnet, dass** die Motorwelle (46) axial zum Schweißdraht (13) angeordnet ist und der Schweißdraht (13) durch die hohl ausgebildete Motorwelle (46) verläuft.

20. Schweißbrenner nach einem der Ansprüche 1 bis 19, **dadurch gekennzeichnet, dass** im Brennergehäuse (28) eine Steuerelektronik zur Steuerung und Regelung des Antriebsmotors (33) angeordnet ist.

21. Schweißbrenner nach einem der Ansprüche 1 bis 20, **dadurch gekennzeichnet, dass** eine Steuerelektronik für den Antriebsmotor (33) extern, insbesondere im Schweißgerät (1) oder in einer Drahtfördervorrichtung (119) usw., angeordnet ist.

22. Schweißbrenner nach einem der Ansprüche 1 bis 21, **dadurch gekennzeichnet, dass** im Brennergehäuse (28) zumindest ein Schaltelement zur Steuerung oder Regelung des Schweißprozesses integriert ist.

23. Schweißbrenner nach einem der Ansprüche 1 bis 22, **dadurch gekennzeichnet, dass** das Brennergehäuse (28) oder ein Teil davon aus einem gut wärmeleitenden Material und/oder aus Kunststoff gebildet ist.

24. Schweißbrenner nach einem der Ansprüche 1 bis 23, **dadurch gekennzeichnet, dass** im Brennergehäuse (28) eine Montageplatte (55) angeordnet ist, an der benötigte Teile oder Führungen angebracht sind.

25. Schweißbrenner nach einem der Ansprüche 1 bis 24, **dadurch gekennzeichnet, dass** der Antriebsmotor (33) als Synchronmotor ausgebildet ist.

26. Schweißbrenner nach einem der Ansprüche 1 bis 24, **dadurch gekennzeichnet, dass** der Antriebsmotor (33) als Gleichstrommotor ausgebildet ist.

27. Schweißbrenner nach einem der Ansprüche 1 bis 24, **dadurch gekennzeichnet, dass** der Antriebsmotor (33) als Schrittmotor ausgebildet ist.

28. Schweißbrenner nach einem der Ansprüche 1 bis 27, **dadurch gekennzeichnet, dass** eine Isolierung zwischen Antriebsrolle (31) und Grundkörper (37) angeordnet ist.

29. Schweißbrenner nach Anspruch 28, **dadurch gekennzeichnet, dass** die Isolierung als Isolierschicht (54) ausgebildet ist, die zwischen Antriebsrolle (31) und Motorwelle (46) und/oder Motorwelle (46) und Rotorpaket und/oder Motorwelle (46) und Lager (43, 44) und/oder Rotorpaket und Stator und/oder Stator und Brennergehäuse (28) ausgebildet ist.

30. Schweißbrenner nach einem der Ansprüche 23 bis 28, **dadurch gekennzeichnet, dass** die Antriebsrolle (33) und/oder Motorwelle (46) aus elektrisch nichtleitendem Material gebildet ist.

31. Schweißbrenner nach einem Ansprüche 1 bis 30, **dadurch gekennzeichnet, dass** das Brennergehäuse (28) oder ein Teil davon als stromführender Teilzur Übertragung des Schweißstroms ausgebildet ist.

32. Schweißbrenner nach einem der Ansprüche 1 bis 31, **dadurch gekennzeichnet, dass** über das Brennergehäuse (28) oder einen Teil davon, insbesondere den elektrisch leitenden Teilen des Brennergehäuses (28), eine Isolationsschicht aufgebracht ist.

33. Schweißbrenner nach einem der Ansprüche 1 bis 32, **dadurch gekennzeichnet, dass** zwischen der Brenneraufnahme (40) und dem Brennergehäuse (28) eine Isolierung angeordnet ist oder die Brenneraufnahme (40) aus einem elektrisch nichtleitenden Material gebildet ist.

34. Schweißbrenner nach einem der Ansprüche 1 bis 33, **dadurch gekennzeichnet, dass** der Antriebsmotor (33), insbesondere die Statorwicklung (47) oder die Statormagnete und/oder Rotorwicklung (49) oder Rotormagneten, durch zusätzliche Module erweiterbar sind, insbesondere um die Leistung und das Ansprechverhalten des Antriebsmotors (33) anzupassen.

35. Schweißbrenner nach einem der Ansprüche 1 bis 34, **dadurch gekennzeichnet, dass** ein Drehgeber mit dem Rotor (45) oder der Antriebsrolle (31) verbunden ist.

36. Schweißbrenner nach einem der Ansprüche 1 bis 35, **dadurch gekennzeichnet, dass** die einzelnen Teile des Antriebsmotors (33) zur Erkennung der Kenndaten des Antriebsmotors (33) einen Speicherbaustein aufweisen.

37. Schweißbrenner nach einem der Ansprüche 1 bis 36, **dadurch gekennzeichnet, dass** mehrere Antriebsmotoren (33) im Brennergehäuse (28) angeordnet sind.

38. Schweißbrenner nach einem der Ansprüche 8 bis 37, **dadurch gekennzeichnet, dass** am Zwischenstück (50) ein Spannhebel (35) für die Druckrolle (32) und die Lagerung der Druckrolle (32) angeordnet ist.

39. Schweißbrenner nach einem der Ansprüche 1 bis 38, **dadurch gekennzeichnet, dass** das Brennergehäuse (28) entlang einer Rotorachse geteilt ist.

## Claims

1. A welding torch including a torch housing (28), wherein a drive unit (30) formed by at least a drive roller (31) and a pressure roller (32) and a drive motor (33) for feeding a welding wire (13) is arranged in the torch housing, **characterized in that** a part of the torch housing (28) is designed as a stator housing of the drive motor (33) of the drive unit (30), and that bearings (43, 44) to stabilize and position a rotor (45) of the drive motor (33) are provided on the torch housing (28).

2. The welding torch according to claim 1, **characterized in that** the torch housing (28) is comprised of several parts.

3. The welding torch according to claim 2, **characterized in that** the torch housing (28) is formed of a base body (37), a cover part (38), an extension part or a torch retainer (40), respectively.

4. The welding torch according to claim 3, **characterized in that** the base body (37) is formed by a part including a free space or opening (48) to receive the individual parts of the drive motor (33) and to which further elements are attachable.

5. The welding torch according to claim 1, **characterized in that** a stator winding (47) of the drive motor (33) is directly installed in the torch housing (28).

6. The welding torch according to any one of claims 1 to 5, **characterized in that** stator magnets of the drive motor (33) are directly installed in the torch housing (28).

7. The welding torch according to any one of claims 1 to 6, **characterized in that** the bearings (43, 44) are directly integrated in the torch housing (28).

8. The welding torch according to any one of claims 1 to 7, **characterized in that** the bearings (43, 44) are mounted in an intermediate piece (50) and the intermediate piece (50) is directly fastened to the torch housing (28).

9. The welding torch according to any one of claims 1 to 8, **characterized in that** one bearing (43 or 44) is fixedly connected with the torch housing (28) and a further bearing (43 or 44) is detachably fastened thereto.

10. The welding torch according to any one of claims 1 to 9, **characterized in that** the rotor (45) is designed as a motor shaft (46) including a rotor winding (49) or a rotor magnet.

11. The welding torch according to any one of claims 8 to 10, **characterized in that** an insulation plate (54) is fastened on the intermediate piece (50).

12. The welding torch according to claims 10 or 11, **characterized in that** the drive roller (31) is directly fastened to the motor shaft (46).

13. The welding torch according to claims 10 or 11, **characterized in that** the motor shaft (46) is connected with a gear and the drive roller (31) is coupled to said gear.

14. The welding torch according to claim 9, **characterized in that** the gear is provided instead of, or in addition to, the intermediate piece (50), and that the gear is fastened to the torch housing (28) or to the intermediate piece (50) or to the insulation plate (54).

15. The welding torch according to any one of claims 1 to 14, **characterized in that** the torch housing (28) is designed as a cooling body for the drive motor (33).

16. The welding torch according to any one of claims 1 to 15, **characterized in that**, in the region of the drive motor (33), cooling channels and/or cooling ducts (52) are arranged in the torch housing (28).

17. The welding torch according to any one of claims 1 to 16, **characterized in that** the torch housing (28) comprises cooling ribs (53) on its outer side.

18. The welding torch according to any one of claims 1 to 17, **characterized in that** the torch housing (28) is designed in the form of a gun welding torch for a manual welding torch (60) with a grip (61), and that the drive motor (33) is installed in the torch housing (28) in the region of the grip (61).

19. The welding torch according to any one of claims 1 to 18, **characterized in that** the motor shaft (46) is arranged axially to the welding wire (13) and that the welding wire (13) extends through the motor shaft (46) which is designed to be hollow.

20. The welding torch according to any one of claims 1 to 19, **characterized in that** a control electronics for controlling and regulating the drive motor (33) is arranged in the torch housing (28).

21. The welding torch according to any one of claims 1 to 20, **characterized in that** a control electronics for the drive motor (33) is arranged externally, in particular in the welding apparatus (1) or in a wire feed device (11) etc.

22. The welding torch according to any one of claims 1 to 21, **characterized in that** at least one switching element for controlling or regulating the welding process is integrated in the torch housing (28).

23. The welding torch according to any one of claims 1 to 22, **characterized in that** the torch housing (28) or a part of it is made of a thermally well conductive material and/or plastic material.

24. The welding torch according to any one of claims 1 to 23, **characterized in that** a mounting plate (55) to which required parts or guides are attached is arranged in the torch housing (28).

25. The welding torch according to any one of claims 1 to 24, **characterized in that** the drive motor (33) is configured as a synchronous motor.

26. The welding torch according to any one of claims 1 to 24, **characterized in that** the drive motor (33) is configured as a direct-current motor.

27. The welding torch according to any one of claims 1 to 24, **characterized in that** the drive motor (33) is designed as a step motor.

28. The welding torch according to any one of claims 1 to 27, **characterized in that** an insulation is arranged between the drive roller (31) and the base body (37).

29. The welding torch according to claim 28, **characterized in that** said insulation is designed as an insulation layer (54) formed between the drive roller (31) and the motor shaft (46) and/or the motor shaft (46) and the rotor pack and/or the motor shaft (46) and the bearings (43, 44) and/or the rotor pack and the stator and/or the stator and the torch housing (28).

30. The welding torch according to any one of claims 23 to 28, **characterized in that** the drive roller (33) and/or motor shaft (46) is made of an electrically non-conductive material.

31. The welding torch according to any one of claims 1 to 30, **characterized in that** the torch housing (28) or a part of it is designed as a live part for the transmission of the welding current.

32. The welding torch according to any one of claims 1 to 31, **characterized in that** an insulation layer is applied over the torch housing (28) or a part of it, in particular the electrically conductive parts of the torch housing (28).

33. The welding torch according to any one of claims 1 to 32, **characterized in that** an insulation is provided between the torch retainer (40) and the torch housing (28), or the torch retainer (40) is made of an electrically non-conductive material.

34. The welding torch according to any one of claims 1 to 33, **characterized in that** the drive motor (33), in particular the stator winding (47) or the stator magnets and/or rotor winding (49) or rotor magnets, are expandable by additional modules to adjust, in particular, the output and response behavior of the drive motor (33).

35. The welding torch according to any one of claims 1 to 34, **characterized in that** a rotary encoder is connected with the rotor (45) or the drive roller (31).

36. The welding torch according to any one of claims 1 to 35, **characterized in that** the individual parts of the drive motor (33) comprise a memory module for the recognition of the characteristics of the drive motor (33).

37. The welding torch according to any one of claims 1 to 36, **characterized in that** several drive motors (33) are arranged in the torch housing (28).

38. The welding torch according to any one of claims 8 to 37, **characterized in that** a tension lever (35) for the pressure roller (32) and the bearing of the pressure roller (32) is arranged on the intermediate part (50).

39. The welding torch according to any one of claims 1 to 38, **characterized in that** the torch housing (28) is divided along a rotor axis.

## Revendications

1. Chalumeau de soudage comportant un carter (28) dans lequel est disposée une unité d'entraînement (30) formée d'au moins un galet d'entraînement (31), un galet presseur (32) et un moteur d'entraînement (33) et qui permet de faire défiler un fil à souder (13), **caractérisé en ce qu'**une partie du carter (28) est réalisée sous forme de carter de stator du moteur d'entraînement (33) de l'unité d'entraînement (30), et **en ce que** sur le carter (28) sont prévus des paliers (43, 44) permettant de stabiliser et de positionner un rotor (45) du moteur d'entraînement (33).

2. Chalumeau de soudage selon la revendication 1, **caractérisé en ce que** le carter (28) est constitué de plusieurs parties.

3. Chalumeau de soudage selon la revendication 2, **caractérisé en ce que** le carter (28) est constitué d'un corps de base (37), d'un couvercle (38), d'une embase ou d'une admission de chalumeau (40).

4. Chalumeau de soudage selon la revendication 3, **caractérisé en ce que** le corps de base (37) est formé par une partie qui comporte un dégagement ou une ouverture (48), destinée à recevoir les pièces individuelles du moteur d'entraînement (33), et contre laquelle sont fixés d'autres éléments.

5. Chalumeau de soudage selon la revendication 1, **caractérisé en ce qu'**un enroulement statorique (47) du moteur d'entraînement (33) est intégré directement dans le carter (28).

6. Chalumeau de soudage selon l'une quelconque des revendications 1 à 5, **caractérisé en ce que** des aimants statoriques du moteur d'entraînement (33) sont intégrés directement dans le carter (28).

7. Chalumeau de soudage selon l'une quelconque des revendications 1 à 6, **caractérisé en ce que** les paliers (43, 44) sont intégrés directement dans le carter (28).

8. Chalumeau de soudage selon l'une quelconque des revendications 1 à 7, **caractérisé en ce que** les paliers (43, 44) sont montés dans une pièce intermédiaire (50) et ladite pièce intermédiaire (50) est fixée directement sur le carter (28).

9. Chalumeau de soudage selon l'une quelconque des revendications 1 à 8, **caractérisé en ce qu'**un palier (43 ou 44) est assemblé de manière fixe au carter (28) et un autre palier (43 ou 44) est fixé de manière amovible.

10. Chalumeau de soudage selon l'une quelconque des revendications 1 à 9, **caractérisé en ce que** le rotor (45) est réalisé sous forme d'arbre moteur (46) avec un enroulement rotorique (49) ou un aimant rotorique.

11. Chalumeau de soudage selon l'une quelconque des revendications 8 à 10, **caractérisé en ce qu'**une plaque isolante (54) est fixée sur la pièce intermédiaire (50).

12. Chalumeau de soudage selon la revendication 10 ou 11, **caractérisé en ce que** le galet d'entraînement (31) est fixé directement sur l'arbre moteur (46).

13. Chalumeau de soudage selon la revendication 10 ou 11, **caractérisé en ce que** l'arbre moteur (46) est relié à un engrenage et le galet d'entraînement (31) est couplé sur ledit engrenage.

14. Chalumeau de soudage selon la revendication 9, **caractérisé en ce que** l'engrenage est agencé en lieu et place de la pièce intermédiaire (50) ou en plus de la pièce intermédiaire (50), et ledit engrenage est fixé sur le carter (28) ou sur la pièce intermédiaire (50) ou sur la plaque isolante (54).

15. Chalumeau de soudage selon l'une quelconque des revendications 1 à 14, **caractérisé en ce que** le carter (28) est réalisé sous la forme d'un corps de refroidissement pour le moteur d'entraînement (33).

16. Chalumeau de soudage selon l'une quelconque des revendications 1 à 15, **caractérisé en ce que** des canaux de refroidissement et/ou des conduites de refroidissement (52) sont prévus dans le carter (28) dans la zone du moteur d'entraînement (33).

17. Chalumeau de soudage selon l'une quelconque des revendications 1 à 16, **caractérisé en ce que** le carter (28) comporte des nervures de refroidissement (53) sur la face extérieure.

18. Chalumeau de soudage selon l'une quelconque des revendications 1 à 17, **caractérisé en ce que** le carter (28) est réalisé sous la forme d'un chalumeau-pistolet pour un chalumeau portable (60) avec une poignée (61), et le moteur d'entraînement (33) est monté dans le carter (28) dans la zone de la poignée (61).

19. Chalumeau de soudage selon l'une quelconque des revendications 1 à 18, **caractérisé en ce que** l'arbre moteur (46) est disposé axialement par rapport au fil à souder (13) et ledit fil à souder (13) s'étend au travers de l'arbre moteur (46) creux.

20. Chalumeau de soudage selon l'une quelconque des revendications 1 à 19, **caractérisé en ce que** dans le carter (28) est disposée une électronique de commande destinée à commander et régler le moteur d'entraînement (33).

21. Chalumeau de soudage selon l'une quelconque des revendications 1 à 20, **caractérisé en ce qu'**une électronique de commande pour le moteur d'entraînement (33) est disposée à l'extérieur, en particulier dans l'appareil de soudage (1) ou dans un dispositif de défilement du fil (119), etc.

22. Chalumeau de soudage selon l'une quelconque des revendications 1 à 21, **caractérisé en ce qu'**au moins un élément de commutation pour la commande ou le réglage du processus de soudage est intégré dans le carter (28).

23. Chalumeau de soudage selon l'une quelconque des revendications 1 à 22, **caractérisé en ce que** le carter (28) ou une partie de celui-ci est réalisé dans un matériau bon thermoconducteur et/ou dans une matière plastique.

24. Chalumeau de soudage selon l'une quelconque des revendications 1 à 23, **caractérisé en ce que** dans le carter (28) est agencée une plaque de montage (55), sur laquelle sont attachés les pièces ou guidages nécessaires.

25. Chalumeau de soudage selon l'une quelconque des revendications 1 à 24, **caractérisé en ce que** le moteur d'entraînement (33) est réalisé sous la forme d'un moteur synchrone.

26. Chalumeau de soudage selon l'une quelconque des revendications 1 à 24, **caractérisé en ce que** le moteur d'entraînement (33) est réalisé sous la forme d'un moteur à courant continu.

27. Chalumeau de soudage selon l'une quelconque des revendications 1 à 24, **caractérisé en ce que** le moteur d'entraînement (33) est réalisé sous la forme d'un moteur pas à pas.

28. Chalumeau de soudage selon l'une quelconque des revendications 1 à 27, **caractérisé en ce qu'**une isolation est disposée entre le galet d'entraînement (31) et le corps de base (37).

29. Chalumeau de soudage selon la revendication 28, **caractérisé en ce que** l'isolation est réalisée sous la forme d'une couche isolante (54), qui est réalisée entre le galet d'entraînement (31) et l'arbre moteur (46) et/ou l'arbre moteur (46) et l'empilement du rotor et/ou l'arbre moteur (46) et les paliers (43, 44) et/ou l'empilement du rotor et le stator et/ou le stator et le carter (28).

30. Chalumeau de soudage selon l'une quelconque des revendications 23 à 28, **caractérisé en ce que** le galet d'entraînement (33) et/ou l'arbre moteur (46) sont réalisés dans un matériau non électroconducteur.

31. Chalumeau de soudage selon l'une quelconque des revendications 1 à 30, **caractérisé en ce que** le carter (28) ou une partie de celui-ci est réalisé sous la forme d'une partie guidant le courant pour la transmission du courant de soudage.

32. Chalumeau de soudage selon l'une quelconque des revendications 1 à 31, **caractérisé en ce qu'**une couche isolante est déposée sur le carter (28) ou d'une partie de celui-ci, en particulier sur les parties électroconductrices du carter (28).

33. Chalumeau de soudage selon l'une quelconque des revendications 1 à 32, **caractérisé en ce qu'**une isolation est disposée entre l'admission du chalumeau (40) et le carter (28) ou l'admission du chalumeau (40) est réalisée dans un matériau non électroconducteur.

34. Chalumeau de soudage selon l'une quelconque des revendications 1 à 33, **caractérisé en ce que** le moteur d'entraînement (33), en particulier l'enroulement statorique (47) ou les aimants statoriques et/ou l'enroulement rotorique (49) ou les aimants rotoriques peuvent être agrandis par des modules supplémentaires, en particulier pour ajuster la puissance et la réponse du moteur d'entraînement (33).

35. Chalumeau de soudage selon l'une quelconque des revendications 1 à 34, **caractérisé en ce qu'**un capteur de rotation est relié au rotor (45) ou au galet d'entraînement (31).

36. Chalumeau de soudage selon l'une quelconque des revendications 1 à 35, **caractérisé en ce que** les différentes pièces du moteur d'entraînement (33) comportent un module de mémoire pour détecter les caractéristiques du moteur d'entraînement (33).

37. Chalumeau de soudage selon l'une quelconque des revendications 1 à 36, **caractérisé en ce que** plusieurs moteurs d'entraînement (33) sont disposés dans le carter (28).

38. Chalumeau de soudage selon l'une quelconque des revendications 8 à 37, **caractérisé en ce qu'**un levier de serrage (35) pour le galet presseur (32) et le support du galet presseur (32) est disposé sur la pièce intermédiaire (50).

39. Chalumeau de soudage selon l'une quelconque des revendications 1 à 38, **caractérisé en ce que** le carter (28) est divisé le long d'un axe du rotor.
